# EUROPÄISCHE PATENTSCHRIFT

(11) **EP 3 380 258 B1**
(45) Veröffentlichungstag und Bekanntmachung des Hinweises auf die Patenterteilung: **04.12.2019**
(21) Anmeldenummer: 16785456.1
(22) Anmeldetag: 21.10.2016
(51) Int. Cl.: B21D 28/06, B21D 28/10, B21D 43/28, B21D 28/26, B23Q 7/04

(54) **VERFAHREN UND VORRICHTUNGEN ZUM BEWEGEN UND/ODER ENTLADEN EINES WERKSTÜCKAUSSCHNITTS**
METHOD AND DEVICES FOR MOVING AND/OR DISCHARGING A WORKPIECE CUTOUT
PROCÉDÉ ET DISPOSITIFS DE DÉPLACEMENT ET/OU DE DÉCHARGEMENT D'UN FLAN DE PIÈCE

(30) Priorität: 23.11.2015 DE 102015223062
(43) Veröffentlichungstag der Anmeldung: 03.10.2018
(73) Patentinhaber: Trumpf Werkzeugmaschinen GmbH + Co. KG, 71254 Ditzingen (DE)
(72) Erfinder: DEISS, Magnus, 70372 Stuttgart (DE); OTTNAD, Jens, 76199 Karlsruhe (DE); KÖPP, Frederick, 70825 Münchingen (DE); HELLER, Andreas, 71254 Ditzingen (DE)
(74) Vertreter: Kohler Schmid Möbus Patentanwälte
(86) Internationale Anmeldenummer: PCT/EP2016/075364
(87) Internationale Veröffentlichungsnummer: WO 2017/089049

(56) Entgegenhaltungen:
- EP-A1- 1 967 301
- EP-A1- 2 875 879
- US-A1- 2015 306 653

## Beschreibung

Die Erfindung betrifft ein Verfahren zum Bewegen eines aus einem plattenartigen Werkstück, insbesondere einem Blech, unter zusätzlicher Erzeugung eines Restwerkstücks ausgetrennten Werkstückausschnitts in einer Bewegungsrichtung parallel zu einer Werkstückhauptebene des plattenartigen Werkstücks über eine sich parallel zu der Werkstückhauptebene erstreckende Werkstückauflage, auf welcher das Restwerkstück und der Werkstückausschnitt senkrecht zu der Werkstückhauptebene gelagert sind, wobei der Werkstückausschnitt senkrecht zu der Werkstückhauptebene eine Dicke besitzt und das Restwerkstück und der Werkstückausschnitt parallel zu der Werkstückhauptebene nebeneinander und senkrecht zu der Werkstückhauptebene mit gegenseitiger Überdeckung angeordnet sind und wobei der Werkstückausschnitt in der Bewegungsrichtung bewegt wird, indem das Restwerkstück in der Bewegungsrichtung angetrieben wird und dabei den an dem Restwerkstück parallel zu der Werkstückhauptebene abgestützten Werkstückausschnitt in der Bewegungsrichtung mitnimmt (Oberbegriff von Patentanspruch 1).

Die Erfindung betrifft des Weiteren ein Verfahren gemäß dem Oberbegriff von Patentanspruch 3 zum Entladen eines Werkstückausschnitts von einer Werkstückauflage sowie Fertigungsverfahren gemäß den Oberbegriffen der Patentansprüche 7 und 8, wobei im Rahmen des genannten Verfahrens zum Entladen eines Werkstückausschnitts von einer Werkstückauflage sowie im Rahmen der genannten Fertigungsverfahren ein Verfahren der eingangs genannten Art durchgeführt wird.

Die Erfindung betrifft schließlich auch Vorrichtungen bzw. maschinelle Anordnungen zur Durchführung der vorgenannten Verfahren gemäß den Oberbegriffen der Patentansprüche 15, 16, 20 und 21.

Gattungsgemäßer Stand der Technik ist bekannt aus EP 1 967 301 A1. Diese Druckschrift offenbart eine maschinelle Anordnung zum Bearbeiten von plattenartigen Werkstücken, insbesondere von Blechen, die eine Werkstück-Handlingvorrichtung sowie eine Bearbeitungseinrichtung umfasst. Mittels der Handlingvorrichtung wird ein zu bearbeitendes Werkstück nahe der Bearbeitungseinrichtung auf einer Werkstückauflage abgelegt. Das auf der Werkstückauflage abgelegte Werkstück wird von einer Koordinatenführung der maschinellen Anordnung übernommen und zur schneidenden Bearbeitung relativ zu der Bearbeitungseinrichtung über die Werkstückauflage bewegt. Bei der Werkstückbearbeitung werden aus dem Werkstück Fertigteile ausgetrennt. Als Schneidabfall wird ein die Fertigteile umgebendes Restgitter erstellt. Die Fertigteile werden entweder unmittelbar nach dem Freischneiden von der Werkstück-Handlingvorrichtung aus dem Restgitter entnommen oder zunächst mittels der Koordinatenführung gemeinsam mit dem Restgitter über die Werkstückauflage in eine in unmittelbarer Nähe der Bearbeitungseinrichtung gelegene Position bewegt, in welcher die Fertigteile für die Entnahme durch die Werkstück-Handlingvorrichtung zugänglich sind.

Die Aufgabe der vorliegenden Erfindung besteht darin, den Stand der Technik dahingehend weiterzubilden, dass sich die Prozesssicherheit erhöht. Erfindungsgemäß gelöst wird diese Aufgabe durch die Verfahren gemäß den unabhängigen Patentansprüchen 1, 3, 7 und 8 sowie durch die Vorrichtungen bzw. durch die maschinellen Anordnungen gemäß den unabhängigen Patentansprüchen 15, 16, 20 und 21.

Das im Falle der Erfindung synchron mit dem Restwerkstück und dem Werkstückausschnitt bewegte Widerlager für den Werkstückausschnitt verhindert, dass sich der Werkstückausschnitt bei der gemeinschaftlich mit dem Restwerkstück ausgeführten Bewegung über die Werkstückauflage senkrecht zu der Werkstückhauptebene in Positionen bewegt, in welcher eine funktionssichere Mitnahme des Werkstückausschnitts durch das Restwerkstück nicht mehr gewährleistet ist. Insbesondere verhindert das Widerlager für den Werkstückausschnitt, dass sich der Werkstückausschnitt im Laufe der gemeinschaftlich mit dem Restwerkstück in der Bewegungsrichtung ausgeführten Bewegung über oder unter das Restwerkstück schiebt und dadurch die gemeinsame Bewegung des Restwerkstücks und des Werkstückausschnitts behindert und/oder gegenüber dem Restwerkstück in eine Position gelangt, aufgrund derer der zum Entladen in die Umschlagposition bewegte Werkstückausschnitt nicht oder nur unter großen Schwierigkeiten von der Werkstückauflage abgeführt werden kann. Von besonderer Bedeutung ist die Erfindung für den Transfer von dünnen Werkstücken, beispielsweise im Anschluss an die Bearbeitung von Blechen mit einer Blechdicke von weniger als drei Millimetern. Aufgrund der verhältnismäßig geringen Eigensteifigkeit des durch trennende Bearbeitung eines Rohblechs erstellten Werkstückausschnittes besteht in derartigen Anwendungsfällen eine besonders große Gefahr der Fehlausrichtung des Werkstückausschnitts während der sich an das Austrennen anschließenden gemeinschaftlichen Bewegung des Werkstückausschnitts und des Restwerkstücks über die Werkstückauflage.

Die Position, welche das Widerlager für den Werkstückausschnitt zur Verhinderung einer für den Prozessablauf schädlichen Ausrichtung des Werkstückausschnitts senkrecht zu der Werkstückhauptebene gegenüber dem Restwerkstück einnehmen muss, ist in Grenzen variabel. Maximal darf das Widerlager für den Werkstückausschnitt senkrecht zu der Werkstückhauptebene einen Abstand von dem Restwerkstück aufweisen, der kleiner ist als die Dicke des Werkstückausschnitts. Aufgrund dieser Bemessung des Abstandes des Widerlagers für den Werkstückausschnitt von dem Restwerkstück ist gewährleistet, dass der Werkstückausschnitt und das Restwerkstück während der gemeinsamen Bewegung in der Bewegungsrichtung eine gegenseitige Überdeckung senkrecht zu der Werkstückhauptebene beibehalten und das Restwerkstück folglich den Werkstückausschnitt funktionssicher in der Bewegungsrichtung mitnehmen kann. Erfindungsgemäß ist insbesondere denkbar, dass der gegenseitige Abstand des Widerlagers für den Werkstückausschnitt und des Restwerkstücks senkrecht zu der Werkstückhauptebene gleich null ist und das Widerlager dementsprechend bei mit dem Restwerkstück fluchtendem Werkstückausschnitt auf dem Werkstückausschnitt aufsetzt.

Besondere Ausführungsarten der Verfahren, der Vorrichtungen und der maschinellen Anordnungen nach den unabhängigen Patentansprüchen ergeben sich aus den abhängigen Patentansprüchen 2, 4 bis 6, 9 bis 14, 17 bis 19 und 22 bis 26.

In jedem Fall wird der Werkstückausschnitt durch das Restwerkstück in der Bewegungsrichtung geschoben.

In bevorzugter Ausgestaltung der Vorrichtung gemäß Patentanspruch 15 und der Vorrichtung gemäß Patentanspruch 16 ist zu diesem Zweck vorgesehen, dass das Widerlager für den Werkstückausschnitt mittels eines Widerlagerantriebs unabhängig von dem mittels des Restwerkstückantriebs angetriebenen Restwerkstücks in der Bewegungsrichtung antreibbar ist. Das Widerlager für den Werkstückausschnitt und das Restwerkstück und somit auch das Widerlager und der mit dem Restwerkstück bewegungsverbundene Werkstückausschnitt werden mittels getrennter Antriebe in der Bewegungsrichtung angetrieben und zusätzlich zu einem Restwerkstückantrieb ist ein Widerlagerantrieb vorgesehen.

Eine nur aufwändig zu erreichende vollständige Synchronisierung des Restwerkstückantriebs und des Widerlagerantriebs ist dann nicht notwendig, wenn das den Werkstückausschnitt in der Bewegungsrichtung begleitende Widerlager senkrecht zu der Werkstückhauptebene von dem Werkstückausschnitt einen von null verschiedenen Abstand aufweist. In diesem Fall hat die infolge der unvollständigen Synchronisierung des Restwerkstückantriebs und des Widerlagerantriebs parallel zu der Werkstückhauptebene auftretende Relativbewegung zwischen dem Widerlager für den Werkstückausschnitt und dem Werkstückausschnitt keine negativen Auswirkungen auf den Prozessablauf. Es muss lediglich sichergestellt sein, dass der Unterschied zwischen der Geschwindigkeit des in der Bewegungsrichtung bewegten Widerlagers und der Geschwindigkeit des gleichgerichtet bewegten Werkstückausschnitts nicht derart groß ist, dass die in der Bewegungsrichtung bestehende Überdeckung des Werkstückausschnitts durch das Widerlager im Laufe der Bewegung verloren geht.

Sind zur Bewegung des Widerlagers für den Werkstückausschnitt einerseits und für die Bewegung des Restwerkstücks und des von diesem mitgenommenen Werkstückausschnitts andererseits separate Antriebe vorgesehen und liegt das Widerlager während der gemeinsamen Bewegung des Restwerkstücks und des Werkstückausschnitts an dem Werkstückausschnitt an, so sind in Weiterbildung der Erfindung im Interesse der angestrebten Prozesssicherheit Vorkehrungen für den Fall getroffen, dass in Folge einer nicht vollständigen Synchronisierung der beiden Antriebe das Restwerkstück und der damit bewegungsverbundene Werkstückausschnitt gegenüber dem Widerlager für den Werkstückausschnitt in der Bewegungsrichtung voreilen.

In vorteilhafter Ausgestaltung des Verfahrens nach Patentanspruch 1 und des Verfahrens nach Patentanspruch 3 ist vorgesehen, dass das Widerlager für den Werkstückausschnitt senkrecht zu der Werkstückhauptebene an dem Werkstückausschnitt angelegt wird und dass das Widerlager bei der gemeinsamen Bewegung des Restwerkstücks und des Werkstückausschnitts einerseits und des Widerlagers andererseits eine Relativbewegung zwischen dem Widerlager und dem Werkstückausschnitt parallel zu der Werkstückhauptebene zulässt.

Um Störungen des Prozessablaufs zu vermeiden, lässt das Widerlager für den Werkstückausschnitt die in Folge der unvollständigen Synchronisierung der beiden Antriebe in der Bewegungsrichtung auftretende Relativbewegung zwischen dem Widerlager und dem mit dem Restwerkstück bewegungsverbundenen Werkstückausschnitt zu. Zu diesem Zweck kann das an dem Werkstückausschnitt anliegende Widerlager beispielsweise parallel zu der Werkstückhauptebene hinreichend nachgiebig sein. Auch besteht erfindungsgemäß die Möglichkeit, dass das Widerlager für den Werkstückausschnitt senkrecht zu der Werkstückhauptebene kraftlos an dem Werkstückausschnitt anliegt und folglich ohne Störungen des Prozessablaufs zulässt, dass das Restwerkstück und der Werkstückausschnitt gegenüber dem Widerlager in der gemeinsamen Bewegungsrichtung voreilen. Anstelle getrennter Antriebe für das Widerlager für den Werkstückausschnitt einerseits und das Restwerkstück und den Werkstückausschnitt andererseits ist in weiterer bevorzugter Ausgestaltung der Erfindung vorgesehen, dass das Widerlager über das Restwerkstück und dementsprechend durch den Restwerkstückantrieb in der Bewegungsrichtung angetrieben wird. Eine entsprechende Variante des Verfahrens nach Patentanspruch 1 und des Verfahrens nach Patentanspruch 3 ist dadurch gekennzeichnet, dass das Widerlager für den Werkstückausschnitt mit dem Werkstückausschnitt in der Bewegungsrichtung bewegt wird, indem das in der Bewegungsrichtung angetriebene Restwerkstück das Widerlager in der Bewegungsrichtung mitnimmt. In Weiterbildung der Vorrichtungen gemäß Patentanspruch 15 und Patentanspruch 16 ist vorgesehen, dass das Widerlager für den Werkstückausschnitt mittels des Restwerkstückantriebs in der Bewegungsrichtung antreibbar ist.

Nachdem der Restwerkstückantrieb eine doppelte Antriebsfunktion übernimmt und sich folglich ein separater Antrieb für das Widerlager für den Werkstückausschnitt erübrigt, lässt sich diese Ausführungsart der Erfindung mit einem verhältnismäßig geringen konstruktiven Aufwand realisieren. Als Restwerkstückantrieb kann insbesondere eine herkömmliche Koordinatenführung vorgesehen sein, an welcher das zu bearbeitende Werkstück und später das Restwerkstück mittels Spannpratzen bekannter Bauart festgelegt sind.

Der Antrieb des Widerlagers für den Werkstückausschnitt durch das Restwerkstück bzw. den Restwerkstückantrieb erfolgt in Weiterbildung der Erfindung über den von dem Restwerkstück in der Bewegungsrichtung mitgenommenen Werkstückausschnitt. Das Widerlager für den Werkstückausschnitt ist dementsprechend mittels des Restwerkstückantriebs über den Werkstückausschnitt in der Bewegungsrichtung antreibbar.

Der Einfachheit halber wird dabei in weiterer bevorzugter Ausgestaltung der Erfindung die Antriebsverbindung zwischen dem mittels des Restwerkstückantriebs in der Bewegungsrichtung angetriebenen Werkstückausschnitt einerseits und dem Widerlager für den Werkstückausschnitt andererseits durch einen Reibschluss zwischen dem Werkstückausschnitt und dem Widerlager hergestellt. Zu diesem Zweck ist eine besondere Ausführungsart der erfindungsgemäßen Vorrichtungen dadurch gekennzeichnet, dass ein Stellantrieb vorgesehen ist, mittels dessen das Widerlager für den Werkstückausschnitt und der Werkstückausschnitt unter Erzeugung einer senkrecht zu der Werkstückhauptebene wirksamen Normalkraft derart aneinander anlegbar sind, dass aus der senkrecht zu der Werkstückhauptebene wirksamen Normalkraft eine parallel zu der Werkstückhauptebene zwischen dem Widerlager und dem Werkstückausschnitt wirksame Reibkraft resultiert, aufgrund derer das Widerlager mittels des Restwerkstückantriebs über den Werkstückausschnitt in der Bewegungsrichtung antreibbar ist. Das Widerlager für den Werkstückausschnitt und der Werkstückausschnitt werden mittels eines Stellantriebs unter Erzeugung einer senkrecht zu der Werkstückhauptebene wirksamen Normalkraft aneinander angelegt, wobei sich aufgrund der Normalkraft zwischen dem Widerlager und dem Werkstückausschnitt die erforderliche Reibung einstellt.

Unebenheiten der Werkstückauflage und/oder Unebenheiten des Werkstückausschnitts können dazu führen, dass der Werkstückausschnitt bei mittels des Restwerkstücks bewirkten Bewegungen über die Werkstückauflage Bewegungen senkrecht zu der Werkstückhauptebene ausführt. Um aus solchen Ausweichbewegungen des Werkstückausschnitts resultierende Störungen des Prozessablaufs zu vermeiden, ist in Weiterbildung der Erfindung vorgesehen, dass das Widerlager für den Werkstückausschnitt Ausweichbewegungen des Werkstückausschnitts senkrecht zu der Werkstückhauptebene kompensieren kann. Ausweislich Patentanspruch 2 ist zu diesem Zweck vorgesehen, dass mit dem Werkstückausschnitt ein Widerlager für den Werkstückausschnitt in der Bewegungsrichtung bewegt wird, welches aufgrund von senkrecht zu der Werkstückhauptebene ausgeführten Bewegungen des Werkstückausschnitts gegen die Wirkung einer Rückstellkraft auslenkbar ist, wobei das ausgelenkte Widerlager und das Restwerkstück senkrecht zu der Werkstückhauptebene einen Abstand voneinander aufweisen, der kleiner ist als die Dicke des Werkstückausschnitts und/oder dass mit dem Werkstückausschnitt ein senkrecht zu der Werkstückhauptebene elastisches Widerlager für den Werkstückausschnitt in der Bewegungsrichtung bewegt wird, welches aufgrund von senkrecht zu der Werkstückhauptebene ausgeführten Bewegungen des Werkstückausschnitts gegen die Wirkung einer Rückstellkraft elastisch verformbar ist, wobei das elastisch verformte Widerlager und das Restwerkstück senkrecht zu der Werkstückhauptebene einen Abstand voneinander aufweisen, der kleiner ist als die Dicke des Werkstückausschnitts.

An der erfindungsgemäßen Vorrichtung ist das Widerlager für den Werkstückausschnitt senkrecht zu der Werkstückhauptebene schwimmend gelagert und aufgrund von senkrecht zu der Werkstückhauptebene ausgeführten Bewegungen des Werkstückausschnitts gegen die Wirkung einer Rückstellkraft auslenkbar, wobei das ausgelenkte Widerlager und das Restwerkstück senkrecht zu der Werkstückhauptebene einen Abstand voneinander aufweisen, der kleiner ist als die Dicke des Werkstückausschnitts. Ergänzend oder alternativ ist das Widerlager für den Werkstückausschnitt senkrecht zu der Werkstückhauptebene elastisch und aufgrund von senkrecht zu der Werkstückhauptebene ausgeführten Bewegungen des Werkstückausschnitts gegen die Wirkung einer Rückstellkraft elastisch verformbar, wobei das elastisch verformte Widerlager und das Restwerkstück senkrecht zu der Werkstückhauptebene einen Abstand voneinander aufweisen, der kleiner ist als die Dicke des Werkstückausschnitts.

Ebenfalls der Prozesssicherheit dient es, dass in weiterer Ausgestaltung der Erfindung Ausweichbewegungen, welche der Werkstückausschnitt während der Bewegung in der Bewegungsrichtung senkrecht zu der Werkstückhauptebene ausführt mittels einer Dämpfungsvorrichtung, gedämpft werden und dass dementsprechend an der erfindungsgemäßen Vorrichtung eine Dämpfungsvorrichtung vorgesehen ist, mittels derer Bewegungen des Werkstückausschnitts, welche der Werkstückausschnitt während der Bewegung in der Bewegungsrichtung senkrecht zu der Werkstückhauptebene ausführt, dämpfbar sind.

Um eine störungsfreie Abfuhr des in die Umschlagposition bewegten Werkstückausschnitts von der Werkstückauflage zu gewährleisten, ist in bevorzugter Ausgestaltung der Erfindung vorgesehen, dass das Restwerkstück während der Abführbewegung des Werkstückausschnitts in Gegenrichtung der Abführbewegung des Werkstückausschnitts kraftbeaufschlagt wird. Durch die Kraftbeaufschlagung des Restwerkstücks wird verhindert, dass das Restwerkstück unerwünschterweise die Abführbewegung des Werkstückausschnitts mitvollzieht und dadurch der Entladeprozess behindert bzw. gestört wird. Die erfindungsgemäße Vorrichtung weist vorzugsweise einen Niederhalter auf, mittels dessen das Restwerkstück während der Abführbewegung des Werkstückausschnitts entsprechend kraftbeaufschlagbar ist.

Im Interesse einer konstruktiven Vereinfachung der erfindungsgemäßen Gesamtanordnung ist ausweislich der Patentansprüche 4 und 17 vorgesehen, dass das Widerlager für den Werkstückausschnitt, welches für eine prozesssichere Bewegung des Restwerkstücks und des Werkstückausschnitts in die Umschlagposition sorgt, außerdem zum Abführen des in die Umschlagposition bewegten Werkstückausschnitts von der Werkstückauflage genutzt wird.

Dabei wirkt in weiterer bevorzugter Ausgestaltung der Erfindung das Widerlager für den Werkstückausschnitt zum Abführen des in die Umschlagposition bewegten Werkstückausschnitts von der Werkstückauflage mit einer Aushebevorrichtung zusammen, die an der von dem Widerlager abliegenden Seite des Werkstückausschnitts angeordnet ist und den Werkstückausschnitt gegen das Widerlager beaufschlagt. Durch eine gemeinsame, senkrecht zu der Werkstückhauptebene ausgeführte Bewegung der Aushebevorrichtung und des Widerlagers für den Werkstückausschnitt wird der zwischen der Aushebevorrichtung und dem Widerlager geklemmte Werkstückausschnitt von der Werkstückauflage abgeführt (Patentansprüche 5, 18).

Die Aushebevorrichtung und/oder das Widerlager für den Werkstückausschnitt sorgt beziehungsweise sorgen vorzugsweise dafür, dass der Werkstückausschnitt während der senkrecht zu der Werkstückhauptebene ausgeführten Abführbewegung parallel zu der Werkstückhauptebene ausgerichtet ist. Während der Abführbewegung stimmt folglich die Ausrichtung des Werkstückausschnitts mit der Ausrichtung des auf der Werkstückauflage verbleibenden und sich gleichfalls parallel zu der Werkstückhauptebene erstreckenden Restwerkstücks überein. Dadurch wird ein Verkippen des von der Werkstückauflage abgeführten Werkstückausschnitts gegenüber dem auf der Werkstückauflage verbleibenden Restwerkstück und ein damit möglicherweise verbundenes Verhaken des Werkstückausschnitts mit dem Restwerkstück verhindert. Parallel zu der Werkstückhauptebene ist der Werkstückausschnitt während der Abführbewegung wenigstens so lange auszurichten, wie der Werkstückausschnitt und das Restwerkstück einander senkrecht zu der Werkstückhauptebene überdecken.

Es ist erfindungsgemäß denkbar, dass das sowohl für die Bewegung des Werkstückausschnitts in die Umschlagposition als auch zum Abführen des Werkstückausschnitts von der Werkstückauflage genutzte Widerlager für den Werkstückausschnitt während der Bewegung des Werkstückausschnitts in die Umschlagposition und während des Abführens des Werkstückausschnitts von der Werkstückauflage einen einheitlichen Zustand aufweist. Erfindungsgemäß bevorzugt wird ein Widerlager für den Werkstückausschnitt, das auf seine jeweilige Funktion abgestimmt ist und folglich wahlweise in einen Transferzustand und in einen von dem Transferzustand verschiedenen Abführzustand überführt werden kann (Patentansprüche 6, 19).

Erfindungsgemäß vorgesehen ist insbesondere, dass das Widerlager für den Werkstückausschnitt in einen Transferzustand überführt wird, in welchem das Widerlager auf den Werkstückausschnitt keine senkrecht zu der Werkstückhauptebene wirksame Haltekraft ausübt und dass das Widerlager in einen Abführzustand überführt wird, in welchem das Widerlager auf den Werkstückausschnitt eine senkrecht zu der Werkstückhauptebene wirksame Haltekraft ausübt. Das Widerlager für den Werkstückausschnitt übt demnach im Abführzustand, nicht aber im Transferzustand, auf den Werkstückausschnitt eine senkrecht zu der Werkstückhauptebene wirksame Haltekraft aus. In diesem Fall kann das Widerlager für den Werkstückausschnitt den Werkstückausschnitt während dessen Bewegung in die Umschlagposition begleiten, ohne an dem Werkstückausschnitt festgelegt zu sein. Hat der Werkstückausschnitt die Umschlagposition erreicht und ist das Widerlager für den Werkstückausschnitt in den Abführzustand geschaltet, so kann das Widerlager genutzt werden, um den nunmehr an dem Widerlager festgelegten Werkstückausschnitt mit einer Abführbewegung senkrecht zu der Werkstückhauptebene von der Werkstückauflage abzuführen beziehungsweise den von der Werkstückauflage abgeführten Werkstückausschnitt auf Abstand von der Werkstückauflage zu halten. Ein entsprechendes Widerlager für den Werkstückausschnitt kann beispielsweise einen Sauger und/oder eine elektromagnetische Halteeinheit aufweisen. Die Bewegung des Werkstückausschnitts in die Umschlagposition vollzieht der Sauger und/oder die elektromagnetische Halteeinheit mit, ohne auf den Werkstückausschnitt eine senkrecht zu der Werkstückhauptebene wirksame Haltekraft auszuüben. Dabei kann der Sauger beziehungsweise die elektromagnetische Halteeinheit von dem Werkstückausschnitt senkrecht zu der Werkstückhauptebene beabstandet sein oder im deaktivierten Zustand an dem Werkstückausschnitt anliegen. Befindet sich der Werkstückausschnitt in der Umschlagposition, so liegt der Sauger und/oder die elektromagnetische Halteeinheit im aktivierten Zustand an dem Werkstückausschnitt an und übt senkrecht zu der Werkstückhauptebene eine Haltekraft auf den Werkstückausschnitt aus.

Ergänzend oder alternativ ist es erfindungsgemäß denkbar, dass das Widerlager für den Werkstückausschnitt in einen Transferzustand überführt wird, in welchem das Widerlager aufgrund von senkrecht zu der Werkstückhauptebene ausgeführten Bewegungen des Werkstückausschnitts gegen die Wirkung einer Rückstellkraft auslenkbar ist und/oder in welchem das Widerlager aufgrund von senkrecht zu der Werkstückhauptebene ausgeführten Bewegungen des Werkstückausschnitts gegen die Wirkung einer Rückstellkraft elastisch verformbar ist und dass das Widerlager in einen Abführzustand überführt wird, in welchem das Widerlager eine senkrecht zu der Werkstückhauptebene starre Anlage für den Werkstückausschnitt ausbildet. Im Transferzustand ist das Widerlager für den Werkstückausschnitt senkrecht zu der Werkstückhauptebene nachgiebig, während es im Abführzustand eine senkrecht zu der Werkstückhauptebene starre Anlage für den Werkstückausschnitt ausbildet. In Weiterbildung der erfindungsgemäßen Vorrichtung ist zu diesem Zweck vorgesehen, dass das Widerlager für den Werkstückausschnitt senkrecht zu der Werkstückhauptebene im Transferzustand schwimmend gelagert und im Abführzustand starr gelagert ist. Im Transferzustand kann ein derartiges Widerlager für den Werkstückausschnitt insbesondere Bewegungen kompensieren, welche der Werkstückausschnitt während seiner Bewegung in die Umschlagposition etwa aufgrund von Unebenheiten der Werkstückauflage senkrecht zu der Werkstückhauptebene ausführt. Dessen ungeachtet kann das Widerlager für den Werkstückausschnitt im Abführzustand als starre Anlage für den Werkstückausschnitt dienen und den Werkstückausschnitt im Interesse einer störungsfreien Abfuhr von der Werkstückauflage parallel zu der Werkstückhauptebene ausrichten. Diese Möglichkeit besteht insbesondere dann, wenn der Werkstückausschnitt an der von dem Widerlager für den Werkstückausschnitt abliegenden Seite durch eine Aushebevorrichtung beaufschlagt wird.

In bevorzugter Ausgestaltung der erfindungsgemäßen Vorrichtung zum Bewegen eines Werkstückausschnitts in einer Bewegungsrichtung und/oder der erfindungsgemäßen Entladevorrichtung ist vorgesehen, dass das für den Werkstückausschnitt vorgesehene Widerlager der Transfervorrichtung eine Saugerplatte mit einer Grundplatte umfasst, die Bohrungen aufweist, in denen Sauger angeordnet sind, wobei die Sauger jeweils eine balgartig gefaltete und elastisch verformbare Saugermanschette aufweisen und wobei die Saugermanschetten in einem Ausgangszustand über die Grundplatte vorstehen und in einem elastisch verformten Zustand vollständig in den Bohrungen der Grundplatte aufgenommen sind. Im Rahmen der erfindungsgemäßen Verfahren und an den erfindungsgemäßen Vorrichtungen kann eine derartige Saugerplatte vielfältige Funktionen übernehmen. Etwa während der Bewegung eines Werkstückausschnitts in der Bewegungsrichtung parallel zu der Werkstückhauptebene können die Sauger der Saugerplatte unmittelbar das senkrecht zu der Werkstückhauptebene wirksame Widerlager für den Werkstückausschnitt ausbilden. Dabei können die zu dem Werkstückausschnitt hin angeordneten Saugermanschetten von dem Werkstückausschnitt beabstandet oder an dem Werkstückausschnitt angelegt sein. Die balgartigen Saugermanschetten können ein senkrecht zu der Werkstückhauptebene auslenkbares Widerlager für den Werkstückausschnitt ausbilden und dadurch Bewegungen kompensieren, welche der mittels des Restwerkstücks über die Werkstückauflage bewegte Werkstückausschnitt beispielsweise aufgrund von Unebenheiten der Werkstückauflage senkrecht zu der Werkstückhauptebene ausführt. Sind die Saugermanschetten parallel zu der Werkstückhauptebene hinreichend nachgiebig, so lassen die an den Werkstückausschnitt angelegten Saugermanschetten Bewegungen zu, die bei unvollständiger Synchronisierung eines für das Widerlager für den Werkstückausschnitt vorgesehenen Antriebs und eines für das Restwerkstück und den Werkstückausschnitt vorgesehenen Antriebs der durch den Restwerkstückantrieb angetriebene Werkstückausschnitt relativ zu dem Widerlager ausführt. Auch sind die Sauger der Saugerplatte bei entsprechender Beschaffenheit in der Lage, Bewegungen, welche der Werkstückausschnitt während der gemeinsamen Bewegung mit dem Restwerkstück senkrecht zu der Werkstückhauptebene ausführt, zu dämpfen. Während der Bewegung des Werkstückausschnitts in die Umschlagposition kann die Saugerplatte in einen Transferzustand überführt sein, in welchem die Sauger der Saugerplatte auf den Werkstückausschnitt keine Haltekraft senkrecht zu der Werkstückhauptebene ausüben und in welchem dementsprechend an den Saugern der Saugerplatte kein Unterdruck anliegt. Der Transferzustand der Saugerplatte kann in diesem Fall insbesondere ohne einen zeitaufwändigen Schaltvorgang realisiert werden. Kurze Zeit bevor der Werkstückausschnitt die Umschlagposition erreicht oder sobald der Werkstückausschnitt in die Umschlagposition bewegt ist, können die an dem Werkstückausschnitt anliegenden Sauger der Saugerplatte auf eine Unterdruckquelle aufgeschaltet und die Saugerplatte dadurch in einen Abführzustand überführt werden. In dem auf diese Art und Weise herbeigeführten Abführzustand übt die Saugerplatte auf den Werkstückausschnitt eine Haltekraft aus, die es ermöglicht, den angesaugten Werkstückausschnitt mittels der Saugerplatte senkrecht zu der Werkstückhauptebene von der Werkstückauflage abzuheben. Die Grundplatte der Saugerplatte kann für einen an der gegenüberliegenden Seite durch eine Aushebevorrichtung beaufschlagten Werkstückausschnitt eine starre Anlage ausbilden und dadurch zu einer hohen Prozesssicherheit beim Abführen des Werkstückausschnitts von der Werkstückauflage beitragen.

Bevorzugte Varianten der erfindungsgemäßen Fertigungsverfahren und der erfindungsgemäßen maschinellen Anordnungen für die Fertigung zeichnen sich ausweislich der Patentansprüche 9 und 22 dadurch aus, dass ein Widerlager für den Werkstückausschnitt an der von der Werkstückauflage abliegenden Seite des Werkstückausschnitts derart angeordnet wird beziehungsweise anordenbar ist, dass das Widerlager und das Restwerkstück bereits beim abschließenden Austrennen des Werkstückausschnitts aus dem plattenartigen Werkstück senkrecht zu der Werkstückhauptebene maximal einen Abstand voneinander aufweisen, der kleiner ist als die Dicke des Werkstückausschnitts. Das Widerlager sorgt dafür, dass der Werkstückausschnitt bereits mit Abschluss des Trennprozesses gegenüber dem Restwerkstück eine für den anschließenden Transfer von Werkstückausschnitt und Restwerkstück geeignete Position einnimmt. Das Widerlager verhindert insbesondere eine durch den Abschluss des Trennprozesses bedingte Fehlausrichtung des Werkstückausschnitts gegenüber dem Restwerkstück. Wird der Werkstückausschnitt etwa durch Lasertrennen und unter Aufgabe eines Schneidgasstrahls auf die Bearbeitungsstelle des als Trennwerkzeug genutzten Laserstrahls aus dem zu bearbeitenden Werkstück ausgetrennt, so besteht die Gefahr, dass der Schneidgasstrahl, der unmittelbar nach dem vollständigen Trennen des Werkstückausschnitts von dem Restwerkstück noch auf die Bearbeitungsstelle des Laserstrahls gerichtet ist, den dann freien Werkstückausschnitt in unerwünschter Weise gegenüber dem Restwerkstück auslenkt. Diese Gefahr besteht insbesondere dann, wenn Werkstückausschnitte mit geringer Eigenmasse, beispielsweise Ausschnitte aus dünnem Blech, erzeugt werden, die bereits durch eine geringe Kraftbeaufschlagung aus ihrer Solllage ausgelenkt werden können.

Auch das beim abschließenden Austrennen des Werkstückausschnitts wirksame Widerlager kann wahlweise an der Oberfläche des zu sichernden Werkstückausschnitts anliegen oder von der Oberfläche des Werkstückausschnitts geringfügig beabstandet sein.

In weiterer bevorzugter Ausgestaltung der Erfindung ist der Einfachheit halber vorgesehen, dass das Widerlager für den Werkstückausschnitt beim abschließenden Austrennen des Werkstückausschnitts auch dasjenige Widerlager bildet, welches mit dem Werkstückausschnitt in der Bewegungsrichtung, gegebenenfalls in die Umschlagposition, bewegt wird (Patentansprüche 10, 23).

Gemäß den Patentansprüchen 11 und 24 ist in Weiterbildung der Erfindung außer dem Widerlager, welches den Werkstückausschnitt beim abschließenden Austrennen sichert, ein zusätzliches Widerlager vorgesehen, welches nach dem abschließenden Austrennen des Werkstückausschnitts aus dem plattenartigen Werkstück an der von der Werkstückauflage abliegenden Seite des Werkstückausschnitts derart angeordnet wird beziehungsweise anordenbar ist, dass das zusätzliche Widerlager und das Restwerkstück senkrecht zu der Werkstückhauptebene maximal einen Abstand voneinander aufweisen, der kleiner ist als die Dicke des Werkstückausschnitts. Das zusätzliche Widerlager kann gleichzeitig mit dem Widerlager für das abschließende Austrennen und dabei gegenüber diesem parallel zu der Werkstückhauptebene versetzt an dem Werkstückausschnitt angeordnet werden oder es kann das Widerlager für das abschließende Austrennen an dem Werkstückausschnitt ersetzen. Auch das zusätzliche Widerlager kann auf dem Werkstückausschnitt aufsetzen oder einen geringfügigen Abstand von der Oberfläche des Werkstückausschnitts einhalten.

In bevorzugter Ausgestaltung der Erfindung wird das Widerlager für das abschließende Austrennen des Werkstückausschnitts bereits zu einem Zeitpunkt an dem Werkstückausschnitt angeordnet, zu welchem der Werkstückausschnitt noch nicht abschließend aus dem zu bearbeitenden Werkstück ausgetrennt ist. Dadurch ist gewährleistet, dass das Widerlager für das abschließende Austrennen mit Abschluss des Trennprozesses die ihm zugedachte Sicherungsfunktion auch tatsächlich ausüben kann. Allerdings ist es dabei denkbar, dass das Widerlager für das abschließende Austrennen zu dem Zeitpunkt, zu welchem es an dem Werkstückausschnitt angeordnet wird, beispielsweise aufgrund einer Störkontur der verwendeten Trennvorrichtung noch nicht in der für den anschließenden Transfer von Werkstückausschnitt und Restwerkstück und/oder für die Abfuhr des Werkstückausschnitts von der Werkstückauflage optimalen Position an dem Werkstückausschnitt angeordnet werden kann. In diesem Fall wird erfindungsgemäß das zusätzliche Widerlager nach dem durch das hierfür vorgesehene Widerlager gesicherten abschließenden Austrennen des Werkstückausschnitts und noch vor Beginn der in der Bewegungsrichtung ausgeführten Bewegung von Werkstückausschnitt und Restwerkstück an dem Werkstückausschnitt angeordnet (Patentanspruch 12). Dabei ist in aller Regel eine Anordnung des zusätzlichen Widerlagers in der für den anschließenden Transfer von Werkstückausschnitt und Restwerkstück und/oder für die Abfuhr des Werkstückausschnitts von der Werkstückauflage optimalen Position möglich, da nach Abschluss des Trennprozesses üblicherweise insbesondere die Trennvorrichtung in eine Position bewegt ist, in welcher der abschließend ausgetrennte Werkstückausschnitt an geeigneter Stelle für das zusätzliche Widerlager zugänglich ist.

Unabhängig davon, ob das zusätzliche Widerlager bereits vor Beginn oder erst während des Transfers von Werkstückausschnitt und Restwerkstück an dem Werkstückausschnitt angeordnet wird, ist in Weiterbildung der Erfindung vorgesehen, dass das zusätzliche Widerlager mit dem Werkstückausschnitt in der Bewegungsrichtung bewegt wird und dabei von dem Restwerkstück senkrecht zu der Werkstückhauptebene einen Abstand aufweist, der kleiner ist als die Dicke des Werkstückausschnitts (Ansprüche 13, 25).

Das für das abschließende Austrennen verwendete Widerlager kann bei Anordnung eines zusätzlichen Widerlagers an dem Werkstückausschnitt je nach Anwendungsfall an dem Werkstückausschnitt verbleiben oder von dem Werkstückausschnitt entfernt werden. Etwa im Falle eines Werkstückausschnitts mit entsprechender Geometrie oder entsprechender flächiger Erstreckung parallel zu der Werkstückhauptebene ist es denkbar, dass sowohl das Widerlager für das abschließende Austrennen als auch das zusätzliche Widerlager gemeinsam mit dem Werkstückausschnitt in der Bewegungsrichtung bewegt werden und/oder verwendet werden, um den in die Umschlagposition bewegten Werkstückausschnitt von der Werkstückauflage abzuführen. Ist beispielsweise ein Werkstückausschnitt erzeugt worden, der aufgrund seiner Beschaffenheit, etwa aufgrund einer Lochung in dem von dem Widerlager für das abschließende Austrennen überdeckten Bereich, nicht an dem Widerlager für das abschließende Austrennen fixierbar ist, so kann das Widerlager für das abschließende Austrennen zwar zusammen mit dem zusätzlichen Widerlager den Werkstückausschnitt in der Bewegungsrichtung begleiten; zum Abführen des Werkstückausschnitts von der Werkstückauflage wird das Widerlager für das abschließende Austrennen dann aber nicht genutzt.

Im Interesse eines zeitoptimierten Verfahrensablaufs wird jeweils diejenige Variante bevorzugt, welche die wenigsten Positioniervorgänge zur Anordnung der Widerlager an dem Werkstückausschnitt erfordert.

Ebenfalls im Interesse eines zeitoptimierten Fertigungsprozesses ist eine weitere bevorzugte Variante der Erfindung dadurch gekennzeichnet, dass der in die Umschlagposition bewegte Werkstückausschnitt mittels des zusätzlichen Widerlagers für den Werkstückausschnitt von der Werkstückauflage abgeführt wird und dass das zusätzliche Widerlager vor der Bewegung des Werkstückausschnitts in der Bewegungsrichtung an der von der Werkstückauflage abliegenden Seite des Werkstückausschnitts parallel zu der Werkstückhauptebene derart angeordnet wird und/oder dass das zusätzliche Widerlager nach dem abschließenden Austrennen mit dem Werkstückausschnitt in der Bewegungsrichtung derart bewegt wird, dass das zusätzliche Widerlager bei Erreichen der Umschlagposition durch den Werkstückausschnitt an der von der Werkstückauflage abliegenden Seite des Werkstückausschnitts derart angeordnet ist, dass der Werkstückausschnitt mittels des zusätzlichen Widerlagers durch ausschließlich senkrecht zu der Werkstückhauptebene gerichtete Bewegung des zusätzlichen Widerlagers von der Werkstückauflage abführbar ist (Patentanspruch 14). Vor dem Einleiten des Abführvorganges erübrigt sich ein zeitaufwändiges Umsetzen des zum Abführen des Werkstückausschnitts von der Werkstückauflage genutzten zusätzlichen Widerlagers gegenüber dem Werkstück. Aufgrund der Mehrfachnutzung des zusätzlichen Widerlagers ergibt sich eine kompakte und mit geringem konstruktivem Aufwand realisierbare Gesamtanordnung (Patentanspruch 26).

Nachfolgend wird die Erfindung anhand beispielhafter schematischer Darstellungen näher erläutert. Es zeigen:
- Figuren 1 bis 8: stark schematisierte Darstellungen einer maschinellen Anordnung für die Blechbearbeitung beim Austrennen eines Fertigteils aus einem Rohblech und beim anschließenden Entladen des Fertigteils,
- Figur 9: das Detail IX in Figur 4,
- Figur 10: eine perspektivische Darstellung eines an der maschinellen Anordnung gemäß den Figuren 1 bis 8 beim Entladen des Fertigteils eingesetzten Widerlagers für das Fertigteil,
- Figur 11: eine Schnittdarstellung des Widerlagers für das Fertigteil gemäß Figur 10 in einer in Figur 10 strichpunktiert angedeuteten Schnittebene,
- Figur 12: die maschinelle Anordnung gemäß den Figuren 1 bis 11 in einer gegenüber den Figuren 1 bis 11 modifizierten Ausführung beim Austrennen eines Fertigteils aus einem Rohblech und
- Figur 13: die maschinelle Anordnung gemäß Figur 12 nach dem abschließenden Austrennen des Fertigteils aus dem Rohblech und vor Beginn des Entladevorgangs.

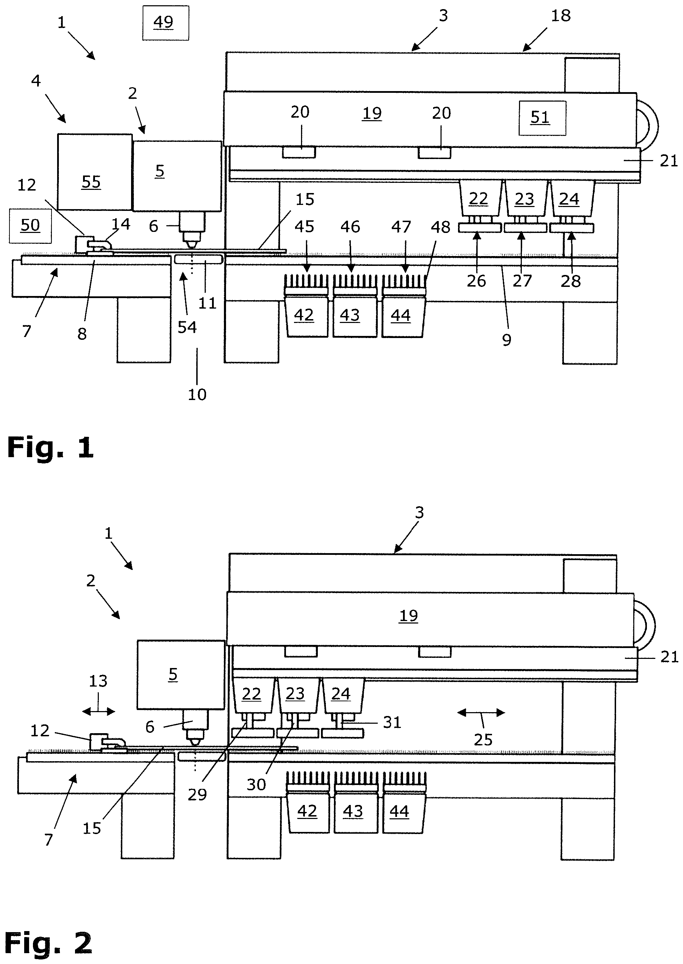

Gemäß den Figuren 1 bis 8 umfasst eine maschinelle Anordnung 1 eine Werkzeugmaschine in Form einer Laserschneidmaschine 2 sowie eine als Automatisierungseinheit vorgesehene Entladestation 3.

Die Laserschneidmaschine 2 weist eine portalartige Führungsstruktur 4 auf, von der in den Figuren 1 bis 8 lediglich ein senkrecht zu der Zeichenebene verlaufender Portalquerträger 55 zu erkennen ist. Längs des Portalquerträgers 55 kann eine Bewegungseinheit 5 mit einem Laserschneidkopf 6 senkrecht zu der Zeichenebene der Figuren 1 bis 8 verfahren. Außerdem kann der Laserschneidkopf 6 relativ zu dem Portalquerträger 55 Bewegungen in vertikaler Richtung ausführen. Der Einfachheit halber ist der Portalquerträger 55 nur in Figur 1 dargestellt.

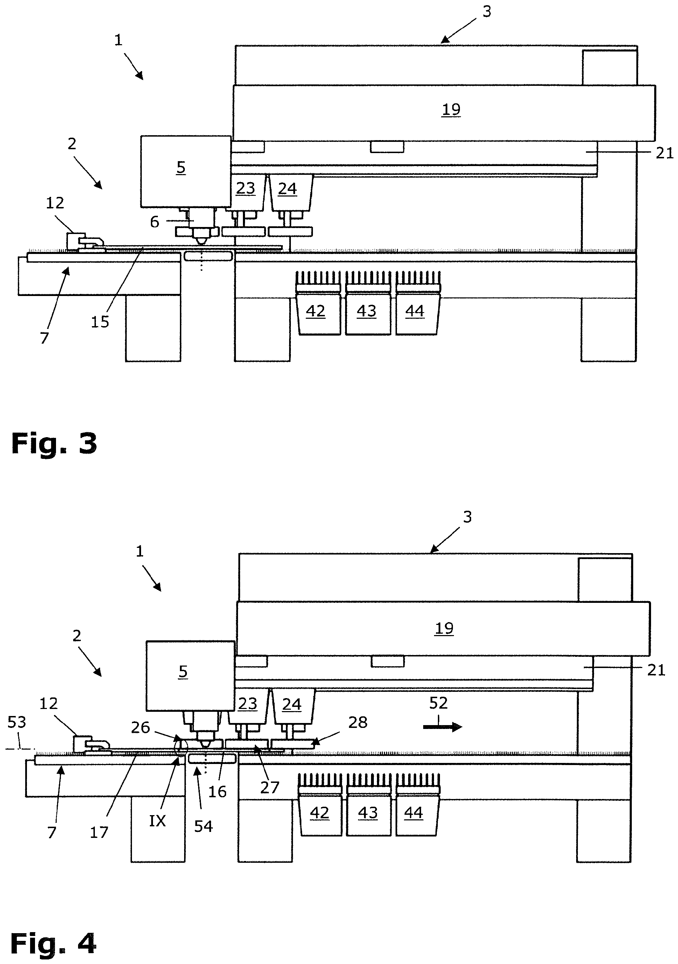

Die portalartige Führungsstruktur 4 überspannt eine Werkstückauflage 7, die an ihrer Oberseite in herkömmlicher Weise mit Borsten besetzt ist. Die Werkstückauflage 7 umfasst einen bearbeitungsseitigen Auflagetisch 8 sowie einen damit in horizontaler Richtung fluchtenden entladeseitigen Auflagetisch 9. Der bearbeitungsseitige Auflagetisch 8 und der entladeseitige Auflagetisch 9 sind durch einen Auflage-Zwischenraum 10 getrennt, in welchem sich eine Strahlaufnahme 11 oder ein nicht dargestellter Werkstückunterstützungsschlitten synchron mit dem Laserschneidkopf 6 senkrecht zu der Zeichenebene der Figuren 1 bis 8 bewegt. An dem bearbeitungsseitigen Auflagetisch 8 ist eine sich senkrecht zu der Zeichenebene der Figuren 1 bis 8 erstreckende Querschiene 12 in Richtung eines Doppelpfeils 13 motorisch bewegbar geführt. Die Querschiene 12 ist mit mehreren in Längsrichtung der Querschiene 12 gegeneinander versetzten Spannpratzen 14 versehen. Die Spannpratzen 14 halten ein plattenartiges Werkstück in Form eines Rohblechs 15 vor und während der schneidenden Bearbeitung mittels des Laserschneidkopfs 6 (Figuren 1 bis 3), wobei die schneidende Bearbeitung des Rohblechs 15 in einem Arbeitsbereich 54 der Laserschneidmaschine 2 erfolgt. Nach der Bearbeitung des Rohblechs 15 und dem damit verbundenen Austrennen eines als Werkstückausschnitt erstellten Fertigteils 16 aus dem Rohblech 15 halten die Spannpratzen 14 ein bei der Bearbeitung des Rohblechs 15 zusätzlich zu dem Fertigteil 16 erzeugtes und als Restgitter 17 vorliegendes Restwerkstück (Figuren 4 bis 8).

Die Entladestation 3 umfasst ein Gestell 18, an welchem ein horizontaler Träger 19 heb- und senkbar gelagert ist. Kragarme 20, die senkrecht zu der Zeichenebene der Figuren 1 bis 8 verlaufen, sind längs des horizontalen Trägers 19 verfahrbar. Die Kragarme 20 lagern eine Führungsschiene 21 bei Bewegungen der Führungsschiene 21 senkrecht zu der Zeichenebene der Figuren 1 bis 8. Längs der Führungsschiene 21 können sich Widerlagereinheiten 22, 23, 24 in Richtung eines Doppelpfeils 25 über die Werkstückauflage 7 bewegen. Eine entsprechende Bewegungsmöglichkeit besteht für die Führungsschiene 21 mit den Kragarmen 20 relativ zu dem horizontalen Träger 19.

Die Widerlagereinheit 22 weist eine Saugerplatte 26, die Widerlagereinheit 23 eine Saugerplatte 27 und die Widerlagereinheit 24 eine Saugerplatte 28 auf. Die Saugerplatten 26, 27, 28 sind baugleich und können mit Hilfe von als Stellantriebe fungierenden pneumatischen Kolben-Zylinder-Einheiten 29, 30, 31 in vertikaler Richtung zugestellt werden.

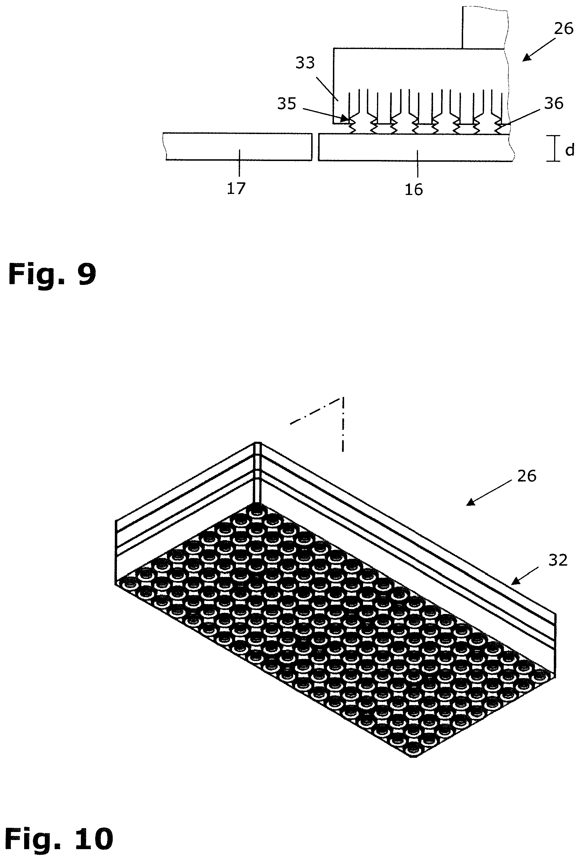

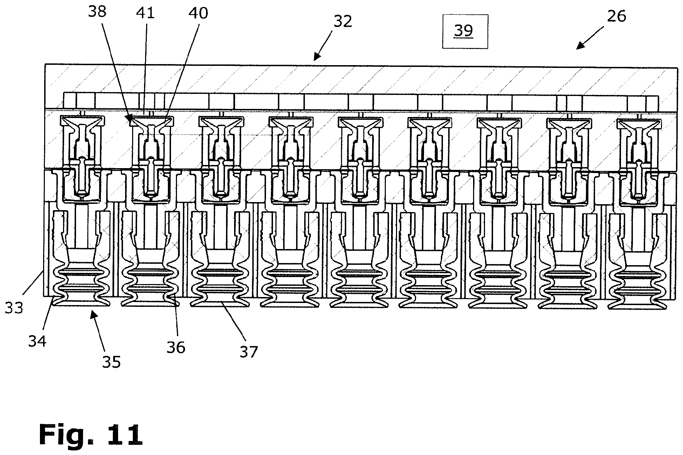

Die Saugerplatte 26 der Widerlagereinheit 22 ist in den Figuren 10 und 11 im Detail dargestellt.

Die Saugerplatte 26 besitzt ein Gehäuse 32 mit einer Grundplatte 33, die mit einer Vielzahl von Bohrungen 34 versehen ist. Die Bohrungen 34 nehmen Sauger 35 auf, von denen jeder eine balgartig gefaltete Saugermanschette 36 aufweist. Die Saugermanschetten 36 stehen im Ausgangszustand der Saugerplatte 26 gegenüber der Grundplatte 33 des Gehäuses 32 vor und sind senkrecht zu der Grundplatte 33 elastisch verformbar. Ein Saugraum 37 im Innern einer jeden Saugermanschette 36 kann über ein schaltbares Ventil 38 auf einen in Figur 11 angedeuteten Unterdruckerzeuger 39 aufgeschaltet werden. In Figur 11 sind die Ventile 38 geöffnet und es besteht folglich eine Verbindung zwischen den Saugräumen 37 der Sauger 35 und dem Unterdruckerzeuger 39. Der Unterdruckerzeuger 39 kann daher über die Saugräume 37 Luft ansaugen.

Ist die Einlassseite der Saugermanschette 36 eines Saugers 35 offen und wird der Unterdruckerzeuger 39 eingeschaltet, so wird das betreffende Ventil 38 geschlossen, indem unter der Wirkung des von dem Unterdruckerzeuger 39 generierten und zu dem Unterdruckerzeuger 39 hin gerichteten Luftstroms eine Dichtlippe 40 gegen eine Dichtfläche 41 des Gehäuses 32 gezogen wird. Dadurch wird die zunächst bestehende Strömungsverbindung zwischen dem betreffenden Saugraum 37 und dem Unterdruckerzeuger 39 unterbrochen.

Ist die Einlassseite der Saugermanschette 36 eines Saugers 35 beispielsweise durch ein an dem Sauger 35 anliegendes Werkstück verschlossen, so wird beim Einschalten des Unterdruckerzeugers 39 an den betreffenden Saugraum 37 ein Unterdruck angelegt. Aufgrund des Verschlusses der Einlassseite der Saugermanschette 36 ergibt sich kein nennenswerter Luftstrom in Richtung auf den Unterdruckerzeuger 39 und die Dichtlippe 40 des Ventils 38 behält ihren Abstand von der Dichtfläche 41 bei. Das Ventil 38 bleibt somit geöffnet und an dem Sauger 35 kann sich eine Haltekraft aufbauen.

Ausweislich der Figuren 1 bis 8 sind an der Entladestation 3 unterhalb der Werkstückauflage 7 Aushebeeinheiten 42, 43, 44 angeordnet, die ebenso wie die Widerlagereinheiten 22, 23, 24 oberhalb der Werkstückauflage 7 motorisch heb- und senkbar sind und in Richtung des Doppelpfeils 25 sowie senkrecht zu der Zeichenebene der Figuren 1 bis 8 zugestellt werden können. Die konstruktiven Maßnahmen zur Realisierung der dreiachsigen Beweglichkeit der Aushebeeinheiten 42, 43, 44 sind der Übersichtlichkeit halber nicht dargestellt und entsprechen den für die Widerlagereinheiten 22, 23, 24 getroffenen Maßnahmen.

An der zu der Werkstückauflage 7 hin weisenden Oberseite ist die Aushebeeinheit 42 mit einem Stiftfeld 45, die Aushebeeinheit 43 mit einem Stiftfeld 46 und die Aushebeeinheit 44 mit einem Stiftfeld 47 versehen. Die Stiftfelder 45, 46, 47 fungieren als Aushebevorrichtungen und werden jeweils von einer Mehrzahl von Aushebestiften 48 gebildet. Der entladeseitige Auflagetisch 9 der Werkstückauflage 7 ist mit nicht dargestellten und sich in vertikaler Richtung erstreckenden Durchtrittsöffnungen für die Aushebestifte 48 der Aushebeeinheiten 42, 43, 44 versehen.

Eine in Figur 1 stark schematisch dargestellte programmierbare numerische Steuerung 49 steuert alle wesentlichen Funktionen sowohl an der Laserschneidmaschine 2 als auch an der Entladestation 3 der maschinellen Anordnung 1. Von der numerischen Steuerung 49 gesteuert werden insbesondere ein als Werkstückantrieb und auch als Restwerkstückantrieb 50 fungierender motorischer Antrieb für die Querschiene 12 an der Laserschneidmaschine 2 sowie ein gleichfalls nur angedeuteter motorischer Widerlagerantrieb 51 der Widerlagereinheiten 22, 23, 24. Zusätzlich zu dem Restwerkstückantrieb 50 und dem Widerlagerantrieb 51 sind unter anderem der Übersichtlichkeit halber nicht dargestellte motorische Antriebe vorgesehen, mittels derer die Hubbewegungen des horizontalen Trägers 19 sowie die horizontalen Bewegungen der Kragarme 20 und der Führungsschiene 21 ausgeführt werden und zu deren Steuerung gleichfalls die numerische Steuerung 49 der maschinellen Anordnung 1 genutzt wird.

Die Funktionsweise der maschinellen Anordnung 1 ist aus den Figuren 1 bis 8 ersichtlich.

Figur 1 zeigt die maschinelle Anordnung 1 zu Beginn der trennenden Bearbeitung des Rohblechs 15. Das Rohblech 15 ist auf der Werkstückauflage 7 der maschinellen Anordnung 1 gelagert und wird an dem in Figur 1 linken Rand durch die an der Querschiene 12 vorgesehenen Spannpratzen 14 klemmend gehalten. Aufgrund von Bewegungen, welche die Querschiene 12 mit dem daran fixierten Rohblech 15 in Richtung des Doppelpfeils 13 und die Bewegungseinheit 5 mit dem Laserschneidkopf 6 längs des Portalquerträgers 55 senkrecht zu der Zeichenebene von Figur 1 ausführen, wird das Rohblech 15 durch einen von dem Laserschneidkopf 6 ausgehenden Laserschneidstrahl mit der gewünschten Schnittkontur trennend bearbeitet. Die Widerlagereinheiten 22, 23, 24 sind zu Beginn der trennenden Bearbeitung des Rohblechs 15 in eine Parkposition abseits der Bearbeitungsstelle des Laserschneidkopfs 6 verfahren. Die Kolbenstangen der Kolben-Zylinder-Einheiten 29, 30, 31 sind maximal in die zugehörigen Zylinder eingefahren. Die Aushebeeinheiten 42, 43, 44 mit den Stiftfeldern 45, 46, 47 sind an der Unterseite der Werkstückauflage 7 in vertikaler Richtung von dieser beabstandet.

In Figur 2 ist die trennende Bearbeitung des Rohblechs 15 weiter fortgeschritten. Die Widerlagereinheiten 22, 23, 24 wurden mittels des Widerlagerantriebs 51 aus der Parkposition gemäß Figur 1 in eine schneidkopfnahe Position verfahren. An den Widerlagereinheiten 22, 23, 24 sind die Kolbenstangen der Kolben-Zylinder-Einheiten 29, 30, 31 ausgefahren und die Saugerplatten 26, 27, 28 dadurch an die Werkstückauflage 7 und das auf dieser aufliegende Rohblech 15 angenähert. Die Aushebeeinheiten 42, 43, 44 an der Unterseite der Werkstückauflage 7 befinden sich nach wie vor in ihrem Ausgangszustand.

Figur 3 zeigt die maschinelle Anordnung 1 kurz bevor der Laserschneidkopf 6 an dem Rohblech 15 den abschließenden Trennschnitt ausführt. Die Widerlagereinheiten 22, 23, 24 sind längs der Führungsschiene 21 in eine Position verfahren, in welcher die Widerlagereinheit 22 vollständig und die Widerlagereinheit 23 teilweise hinter der Bewegungseinheit 5 und dem Laserschneidkopf 6 an der von dem Betrachter von Figur 3 abliegenden Seite der Bewegungseinheit 5 und des Laserschneidkopfs 6 angeordnet ist. Die Aushebeeinheiten 42, 43, 44 befinden sich nach wie vor in ihrem Ausgangszustand.

In Figur 4 hat der Laserschneidkopf 6 in dem Arbeitsbereich 54 den abschließenden Trennschnitt ausgeführt und dadurch aus dem Rohblech 15 das Fertigteil 16 ausgetrennt und zusätzlich als Restwerkstück das Restgitter 17 erzeugt. Der horizontale Träger 19 hat sich an dem Gestell 18 der Entladestation 3 ausgehend von seiner Position gemäß Figur 3 so weit nach unten bewegt, dass die an den weiterhin ausgefahrenen Kolbenstangen der pneumatischen Kolben-Zylinder-Einheiten 29, 30, 31 angebrachten Saugerplatten 26, 27, 28 mit ihrer Unterseite an der Oberseite des Fertigteils 16 (Saugerplatten 26, 27) und an der Oberseite des Restgitters 17 (Saugerplatte 28) anliegen. Die Saugermanschetten 36 der an den Saugerplatten 26, 27, 28 vorgesehenen Sauger 35 sind geringfügig in vertikaler Richtung gestaucht.

Ausweislich Figur 9 weist die Grundplatte 33 der Saugerplatte 26 von der Oberseite des Fertigteils 16 in vertikaler Richtung einen Abstand auf, der kleiner ist als die einheitliche Dicke d des Fertigteils 16 und des Restgitters 17. In entsprechender Weise sind die Grundplatte 33 der Saugerplatte 27 gegenüber dem Fertigteil 16 und die Grundplatte 33 der Saugerplatte 28 gegenüber dem Restgitter 17 angeordnet. Zwischen dem Restgitter 17 und dem Fertigteil 16 ist in Figur 9 der bei der trennenden Bearbeitung des Rohblechs 15 erstellte Schnittspalt zu erkennen. Der für die Saugerplatten 26, 27, 28 vorgesehene Unterdruckerzeuger 39 ist ausgeschaltet. Dementsprechend üben die Sauger 35 der Saugerplatten 26, 27, 28 keine in vertikaler Richtung wirksame Haltekraft auf das Fertigteil 16 und das Restgitter 17 aus.

Die Aushebeeinheiten 42, 43, 44 an der Unterseite der Werkstückauflage 7 befinden sich auch in Figur 4 in ihrem Ausgangszustand.

Ausgehend von den Verhältnissen gemäß Figur 4 wird die Querschiene 12 mit dem daran fixierten Restgitter 17 durch den Restwerkstückantrieb 50 in einer durch einen Pfeil 52 veranschaulichten Bewegungsrichtung nach rechts bewegt. Die Querschiene 12 und der die Querschiene 12 antreibende Restwerkstückantrieb 50 bilden dementsprechend eine Transfervorrichtung, mittels derer das Restgitter 17 und das Fertigteil 16 gemeinschaftlich aus dem Arbeitsbereich 54 der Laserschneidmaschine 2 zu der Entladestation 3 bewegt werden.

Der Widerlagerantrieb 51 ist zunächst noch ausgeschaltet. Infolgedessen bewegt sich das an der Querschiene 12 fixierte Restgitter 17 relativ zu den Saugerplatten 26, 27, 28, die mit den geringfügig gestauchten Saugermanschetten 36 der Sauger 35 an der Oberseite des Fertigteils 16 und des Restgitters 17 anliegen. Das von den Saugerplatten 26, 27 in senkrechter Richtung geringfügig beaufschlagte Fertigteil 16 verändert seine Position in der Bewegungsrichtung 52 zunächst nicht.

Infolge der Bewegung des in der Bewegungsrichtung 52 verschobenen Restgitters 17 relativ zu dem in dieser Richtung zunächst ortsunveränderlichen Fertigteil 16 schließt sich der bei der trennenden Bearbeitung des Rohblechs 15 erzeugte Schnittspalt zwischen dem Restgitter 17 einerseits und dem Fertigteil 16 andererseits und die in der Bewegungsrichtung 52 liegende Schnittkante des Restgitters 17 schlägt an der ihr gegenüberliegenden Schnittkante des Fertigteils 16 an. Die an der Oberseite des Restgitters 17 anliegenden Sauger 35 der Saugerplatte 28 behindern die Bewegung des Restgitters 17 relativ zu dem Fertigteil 16 aufgrund der in horizontaler Richtung bestehenden Nachgiebigkeit der Saugermanschetten 36 nicht.

Das nunmehr an dem Fertigteil 16 seitlich anliegende Restgitter 17 nimmt das Fertigteil 16 in der Bewegungsrichtung 52 mit. Gemeinsam bewegen sich folglich das Fertigteil 16 und das Restgitter 17 in der Bewegungsrichtung 52 über die Werkstückauflage 7 und dabei parallel zu einer in Figur 4 angedeuteten Werkstückhauptebene 53.

Unmittelbar nach dem Anschlagen des Restgitters 17 an dem Fertigteil 16 wird der Widerlagerantrieb 51 zugeschaltet. Durch die numerische Steuerung 49 werden der Restwerkstückantrieb 50 und der Widerlagerantrieb 51 derart gesteuert, dass sich die Widerlagereinheiten 22, 23, 24 mit den Saugerplatten 26, 27, 28 weitgehend synchron mit dem Restgitter 17 und dem durch das Restgitter 17 in der Bewegungsrichtung 52 beaufschlagten Fertigteil 16 in der Bewegungsrichtung 52 bewegen. Relativbewegungen, die sich in der Bewegungsrichtung 52 einstellen, weil der Restwerkstückantrieb 50 und der Widerlagerantrieb 51 nicht ideal synchronisiert sind und weil sich folglich das Fertigteil 16 und das Restgitter 17 einerseits schneller in der Bewegungsrichtung 52 bewegen als die Saugerplatten 26, 27, 28 andererseits, sind für einen störungsfreien Transfer des Fertigteils 16 und des Restgitters 17 in der Bewegungsrichtung 52 unschädlich, da die an dem Fertigteil 16 und dem Restgitter 17 anliegenden Sauger 35 der Saugerplatten 26, 27, 28 in horizontaler Richtung hinreichend nachgiebig sind.

Während der Bewegung in der Bewegungsrichtung 52 fungieren die Saugerplatten 26, 27 als senkrecht zu der Werkstückhauptebene 53 wirksame Widerlager für das Fertigteil 16. Entsprechend bildet die Saugerplatte 28 ein senkrecht zu der Werkstückhauptebene 53 wirksames Widerlager für das Restgitter 17.

Treten im Laufe der Bewegung des Fertigteils 16 und des Restgitters 17 in der Bewegungsrichtung 52 beispielsweise aufgrund von Unebenheiten der Werkstückauflage 7 senkrecht zu der Werkstückhauptebene 53 nach oben gerichtete Bewegungen des Fertigteils 16 relativ zu dem Restgitter 17 auf, so werden die in vertikaler Richtung elastischen Saugermanschetten 36 der Sauger 35 an den Saugerplatten 26, 27 durch das Fertigteil 16 komprimiert und die betreffenden Saugermanschetten 36 federn gegen die Wirkung einer elastischen Rückstellkraft in die Bohrungen 34 an der Grundplatte 33 der Saugerplatten 26, 27 ein. Insofern wirken die Sauger 35 der Saugerplatten 26, 27 als Dämpfungsvorrichtungen.

Bei zu den Saugerplatten 26, 27 hin gerichteten Ausweichbewegungen des Fertigteils 16, deren Betrag den zwischen der Grundplatte 33 der Saugerplatten 26, 27 einerseits und der Oberseite des Fertigteils 16 andererseits anfänglich bestehenden Abstand übersteigt, können die Grundplatten 33 der Saugerplatten 26, 27 durch das nach oben ausweichende Fertigteil 16 gegen die Wirkung einer von den pneumatischen Kolben-Zylinder-Einheiten 29, 30 ausgeübten elastischen Rückstellkraft nach oben ausgelenkt werden. Durch die Kolben-Zylinder-Einheiten 29, 30 werden die Saugerplatten 26, 27 während der gemeinsam mit dem Fertigteil 16 in der Bewegungsrichtung 52 ausgeführten Bewegung senkrecht zu der Werkstückhauptebene 53 schwimmend gelagert. Der Betrag der Auslenkung der Grundplatten 33 der Saugerplatten 26, 27 ist allerding begrenzt. So bleibt auch bei einer mit einer vertikalen Auslenkung der Grundplatten 33 der Saugerplatten 26, 27 verbundenen vertikalen Ausweichbewegung des Fertigteils 16 zwischen den durch das Fertigteil 16 senkrecht zu der Werkstückhauptebene 53 beaufschlagten Grundplatten 33 der Saugerplatten 26, 27 einerseits und dem Restgitter 17 andererseits in senkrechter Richtung ein Abstand erhalten, der kleiner ist als die Dicke des Fertigteils 16.

In jedem Fall ist folglich ungeachtet etwaiger vertikaler Ausschläge des Fertigteils 16 sichergestellt, dass das Fertigteil 16 und das Restgitter 17 während der gemeinsamen Bewegung in der Bewegungsrichtung 52 eine gegenseitige Überdeckung senkrecht zu der Werkstückhauptebene 53 beibehalten und sich das Fertigteil 16 nicht etwa unter oder über das Restgitter 17 schiebt.

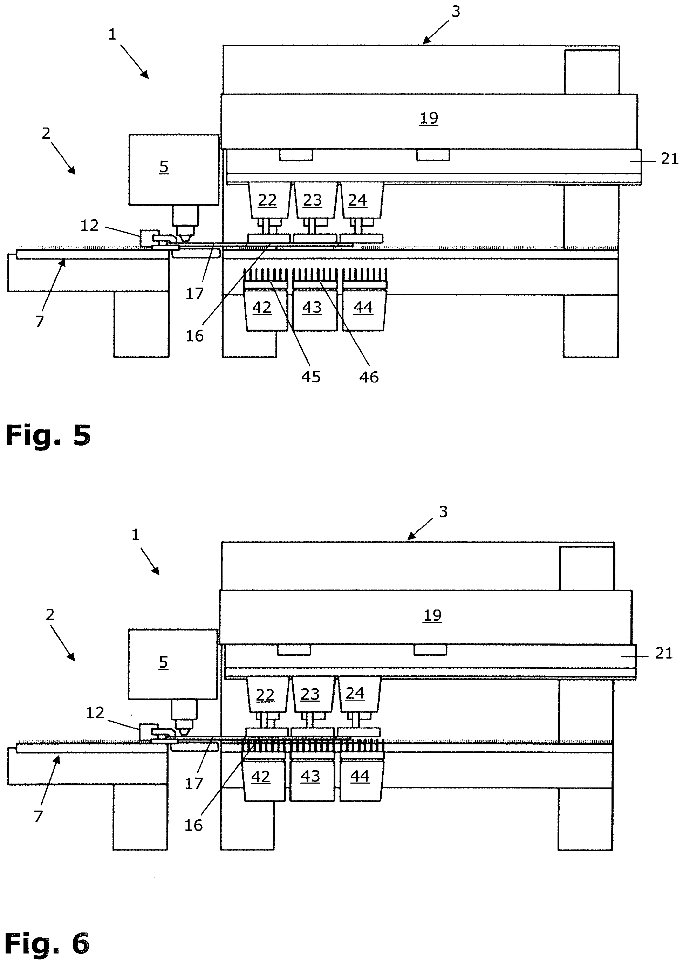

Am Ende der von dem Fertigteil 16 und dem Restgitter 17 gemeinsam mit den Widerlagereinheiten 22, 23, 24 ausgeführten Bewegung in der Bewegungsrichtung 52 ergeben sich die in Figur 5 veranschaulichten Verhältnisse. Das Fertigteil 16, an dessen Oberseite die Sauger 35 der Saugerplatten 26, 27 nach wie vor annähernd drucklos anliegen, ist aus dem Arbeitsbereich 54 der Laserschneidmaschine 2 in die Umschlagposition überführt. Unterhalb der Werkstückauflage 7 sind die Aushebeeinheiten 42, 43, 44 zu der Laserschneidmaschine 2 hin verfahren. Folglich liegen dem in der Umschlagposition befindlichen Fertigteil 16 in vertikaler Richtung die Aushebeeinheiten 42, 43 mit den Stiftfeldern 45, 46 gegenüber. Die Saugerplatte 28 liegt mit ihren Saugern 35 annähernd drucklos an der Oberseite des Restgitters 17 an.

Ausgehend von diesen Verhältnissen werden die Kolbenstangen der pneumatischen Kolben-Zylinder-Einheiten 29, 30, 31 der Widerlagereinheiten 22, 23, 24 gegen eine Bewegung in vertikaler Richtung blockiert. Dadurch wird insbesondere aus der senkrecht zu der Werkstückhauptebene 53 zunächst schwimmenden Lagerung der Grundplatten 33 der Saugerplatten 26, 27 eine starre Lagerung.

Danach werden die Widerlagereinheiten 22, 23, 24 abgesenkt, bis die Grundplatten 33 der Saugerplatten 26, 27, 28 auf der Oberseite des Fertigteils 16 und des Restgitters 17 aufsetzen. Dabei weichen die Saugermanschetten 36 der Sauger 35 vollständig in die Bohrungen 34 der Grundplatten 33 zurück. Die Grundplatten 33 der Saugerplatten 26, 27, 28 fungieren nun als senkrecht zu der Werkstückhauptebene 53 starre Anlagen für das Fertigteil 16 und das Restgitter 17.

Anschließend werden die Aushebeeinheiten 42, 43, 44 in vertikaler Richtung angehoben, sodass durch die Werkstückauflage 7 hindurch die Aushebestifte 48 der Stiftfelder 45, 46 der Aushebeeinheiten 42, 43 an der Unterseite des Fertigteils 16 und das Stiftfeld 47 der Aushebeeinheit 44 an der Unterseite des Restgitters 17 zur Anlage kommen und das Fertigteil 16 und das Restgitter 17 in vertikaler Richtung druckbeaufschlagen. Unter der Wirkung der Druckbeaufschlagung durch die Stiftfelder 45, 46, 47 werden das Fertigteil 16 und das Restgitter 17 gegen die als starre Anlagen fungierenden Grundplatten 33 der Saugerplatten 26, 27, 28 gedrückt (Figur 6).

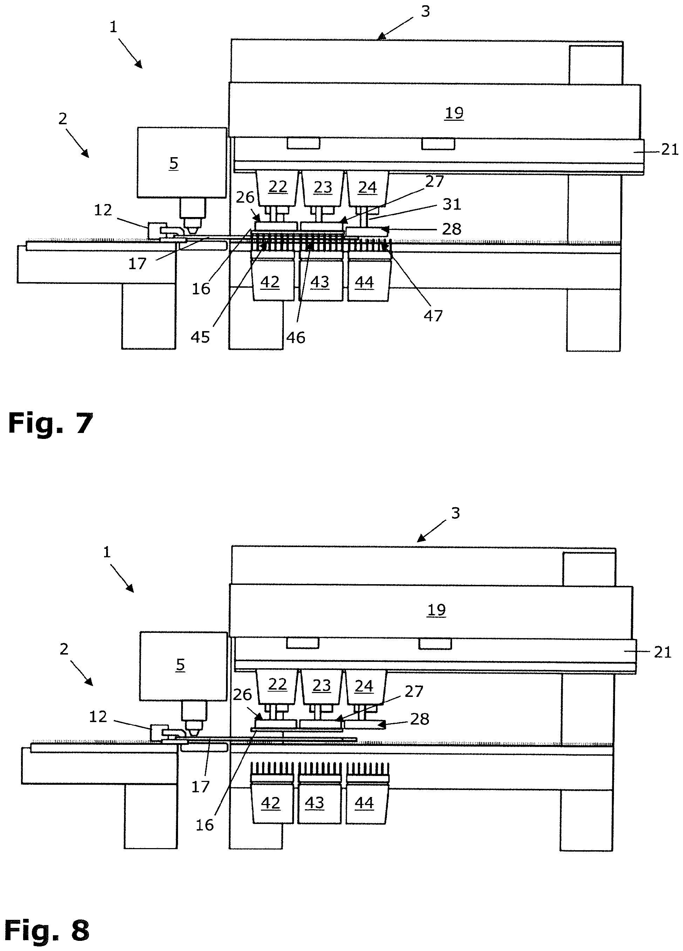

Nun wird das einerseits durch die Aushebestifte 48 der Aushebeeinheiten 42, 43 beaufschlagte und andererseits durch die Grundplatten 33 der Saugerplatten 26, 27 abgestützte Fertigteil 16 durch eine gemeinsame, senkrecht zu der Werkstückhauptebene 53 ausgeführte Bewegung der Aushebestifte 48 der Aushebeeinheiten 42, 43 und der Saugerplatten 26, 27 mit einer senkrecht zu der Werkstückhauptebene 53 ausgeführten Abführbewegung so weit von der Werkstückauflage 7 abgehoben, dass sich das Fertigteil 16 und das Restgitter 17 senkrecht zu der Werkstückhauptebene 53 nicht mehr überdecken. Es ergibt sich damit der in Figur 7 veranschaulichte Betriebszustand der maschinellen Anordnung 1. Die Saugerplatten 26, 27 und die Aushebeeinheiten 42, 43 bilden gemeinschaftlich eine Abführvorrichtung, mittels derer das Fertigteil 16 mit einer senkrecht zu der Werkstückhauptebene 53 ausgeführten Abführbewegung von der Werkstückauflage 7 abgeführt werden kann.

Infolge der Beaufschlagung durch die Aushebestifte 48 der Aushebeeinheiten 42, 43 einerseits und die als starre Anlagen wirkenden Grundplatten 33 der Saugerplatten 26, 27 andererseits behält das Fertigteil 16 während der Abführbewegung seine in der Umschlagposition ursprünglich bestehende Ausrichtung parallel zu der Werkstückhauptebene 53 bei.

Parallel zu der Werkstückhauptebene 53 ist während der Abführbewegung des Fertigteils 16 auch das Restgitter 17 ausgerichtet. Dafür sorgt die Widerlagereinheit 24, die als Niederhaltevorrichtung dient und als solche das Restgitter 17 während der Abführbewegung des Fertigteils 16 an der Oberseite mittels der Saugerplatte 28 druckbeaufschlagt. Zu diesem Zweck fährt die Kolbenstange der pneumatischen Kolben-Zylinder-Einheit 31 der Widerlagereinheit 24 ausgehend von den Verhältnissen gemäß Figur 6 in demselben Maße nach unten aus, wie sich die Saugerplatten 26, 27 und die Aushebestifte 48 der Aushebeeinheiten 42, 43 bei der Abführbewegung des Fertigteils 16 nach oben bewegen. Figur 7 zeigt die maschinelle Anordnung 1 unmittelbar nach dem Ausheben des Fertigteils 16 aus dem Restgitter 17 bei maximal ausgefahrener Kolbenstange der Kolben-Zylinder-Einheit 31 der Widerlagereinheit 24.

Sobald das Fertigteil 16 in vertikaler Richtung aus dem Restgitter 17 ausgehoben ist und folglich senkrecht zu der Werkstückhauptebene 53 zwischen dem Fertigteil 16 und dem Restgitter 17 keine gegenseitige Überdeckung mehr besteht, fährt die Kolbenstange der pneumatischen Kolben-Zylinder-Einheit 31 der Widerlagereinheit 24 in eine der Stellung der Kolbenstangen der pneumatischen Kolben-Zylinder-Einheiten 29, 30 der Widerlagereinheiten 22, 23 entsprechende Stellung ein. Die Aushebeeinheiten 42, 43, 44 werden anschließend geringfügig abgesenkt, bis die Saugermanschetten 36 der an den Saugerplatten 26, 27 vorgesehenen Sauger 35 wieder nach unten über die Grundplatten 33 der Saugerplatten 26, 27 vorstehen. Dann werden die an der Oberseite des Fertigteils 16 anliegenden Sauger 35 der Saugerplatten 26, 27 auf den Unterdruckerzeuger 39 aufgeschaltet und in der Folge üben die Saugerplatten 26, 27 auf das Fertigteil 16 in vertikaler Richtung eine Haltekraft aus. Damit befinden sich die Saugerplatten 26, 27 in einem Abführzustand.

Bis zu diesem Zeitpunkt und insbesondere während der Bewegung des Fertigteils 16 in die Umschlagposition waren die Saugerplatten 26, 27 in einen Transferzustand geschaltet, in welchem an die Sauger 35 der Saugerplatten 26, 27 kein Unterdruck angelegt war und in welchem die Sauger 35 der Saugerplatten 26, 27 folglich eine horizontale Nachgiebigkeit aufwiesen, aufgrund derer sie in der Bewegungsrichtung 52 auftretende Relativbewegungen der vorstehenden Art zwischen den Saugerplatten 26, 27 einerseits und dem Fertigteil 16 andererseits kompensieren konnten.

Sobald die Saugerplatten 26, 27 in den Abführzustand geschaltet sind, werden die Aushebeeinheiten 42, 43 44 unter die Werkstückauflage 7 abgesenkt. Die Aushebestifte 48 der Stiftfelder 45, 46 an den Aushebeeinheiten 42, 43 werden eingefahren. Gleichzeitig wird der horizontale Träger 19 angehoben. Damit ergeben sich die Verhältnisse gemäß Figur 8.

Hiervon ausgehend verfahren die Widerlagereinheiten 22, 23, 24 mit dem an den Widerlagereinheiten 22, 23 gehaltenen Fertigteil 16 längs der Führungsschiene 21 in eine Position, in welcher die Sauger 35 der Saugerplatten 26, 27 drucklos geschaltet werden und das dadurch von den Saugerplatten 26, 27 freigegebene Fertigteil 16 an eine Lagereinheit oder zum Abtransport aus dem Nahbereich der maschinellen Anordnung 1 an ein nicht dargestelltes Fördermittel übergeben wird.

Alternativ zu den vorstehend beschriebenen Verhältnissen besteht die Möglichkeit, die gemeinschaftliche Bewegung des Fertigteils 16 und des Restgitters 17 sowie der Widerlagereinheiten 22, 23, 24 in der Bewegungsrichtung 52 ohne einen eigenen Antrieb für die Widerlagereinheiten 22, 23, 24 zu realisieren. Zu diesem Zweck kann zwischen den Widerlagereinheiten 22, 23, 24 einerseits und dem Fertigteil 16 und/oder dem Restgitter 17 andererseits ein parallel zu der Werkstückhauptebene wirksamer Reibschluss erzeugt werden, welcher das Restgitter 17 und das von diesem in der Bewegungsrichtung 52 verschobene Fertigteil 16 in die Lage versetzt, die an dem Restgitter 17 und dem Fertigteil 16 anliegenden Saugerplatten 26, 27, 28 in der Bewegungsrichtung 52 mitzunehmen. Zur Erzeugung der für den Reibschluss erforderlichen und von den Saugerplatten 26, 27, 28 auf das Fertigteil 16 und/oder das Restgitter 17 auszuübenden Normalkraft können die pneumatischen Kolben-Zylinder-Einheiten 29, 30, 31 der Widerlagereinheiten 22, 23, 24 genutzt werden.

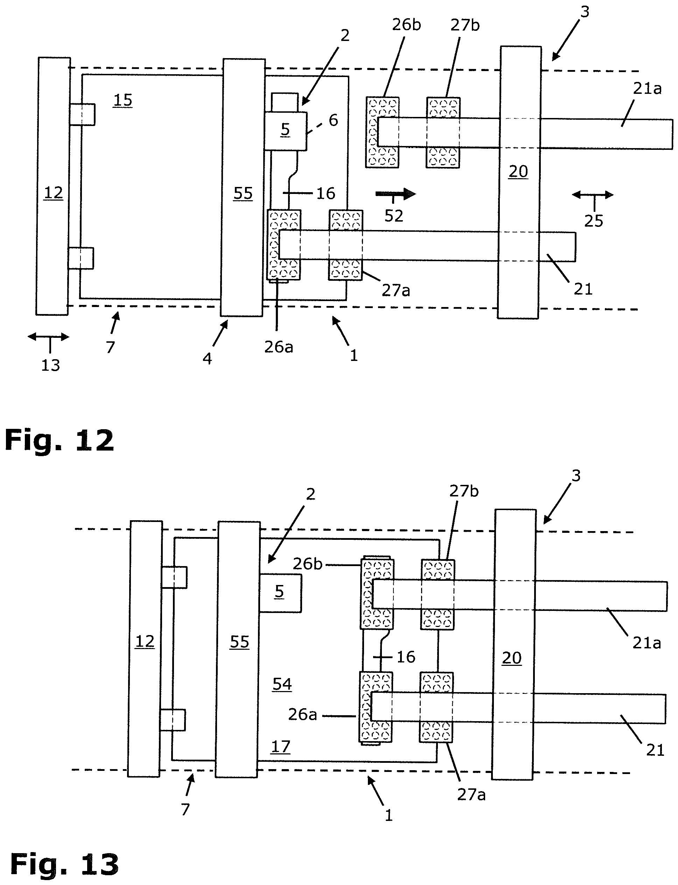

In den Figuren 12 und 13 ist die maschinelle Anordnung 1 gemäß den Figuren 1 bis 11 in einer modifizierten Bauweise dargestellt. Abweichend von den Figuren 1 bis 11 ist an einem Kragarm 20 der Entladestation 3 parallel zu der Führungsschiene 21 eine zweite Führungsschiene 21a angeordnet. Die Führungsschiene 21 und die zweite Führungsschiene 21a sind mittels eines nicht gezeigten motorischen Antriebs unabhängig voneinander in Richtung des Doppelpfeils 25 relativ zu dem Kragarm 20 zustellbar. An der Unterseite jeder der Führungsschienen 21, 21a sind zwei mit den Widerlagereinheiten 22, 23, 24 bau- und funktionsgleiche Widerlagereinheiten angebracht, von denen in den Figuren 12 und 13 Widerlager in Form von Saugerplatten 26a, 27a an der Führungsschiene 21 und Saugerplatten 26b, 27b an der zweiten Führungsschiene 21a zu erkennen sind. Die Saugerplatten 26a, 27a, 26b, 27b stimmen hinsichtlich ihrer Bau- und ihrer Funktionsweise mit den Saugerplatten 26, 27, 28 in den Figuren 1 bis 11 überein.

Gegenüber den in den Figuren 1 bis 11 dargestellten Verhältnissen ebenfalls unverändert ist die Bearbeitungsseite der maschinellen Anordnung 1 in den Figuren 12 und 13.

An dem Portalquerträger 55 der Laserschneidmaschine 2 ist die Bewegungseinheit 5 mit dem Laserschneidkopf 6 längsbeweglich geführt und motorisch angetrieben verfahrbar. Der Portalquerträger 55 ist Teil der portalartigen Führungsstruktur 4, welche die in den Figuren 12 und 13 gestrichelt angedeutete Werkstückauflage 7 überspannt. Mittels der motorisch angetriebenen Querschiene 12 wird das als plattenartiges Werkstück vorgesehene Rohblech 15 zu Bearbeitungszwecken in Richtung des Doppelpfeils 13 über die Werkstückauflage 7 bewegt. Außerdem dient die Querschiene 12 dazu, nach dem abschließenden Austrennen des in Form eines Fertigteils 16 vorliegenden Werkstückausschnitts aus dem Rohblech 15 das Fertigteil 16 gemeinsam mit dem als Restwerkstück erzeugten Restgitter 17 in der Bewegungsrichtung 52 zu bewegen und das Fertigteil 16 dabei in die Umschlagposition zu überführen.

Figur 12 zeigt die Verhältnisse unmittelbar vor dem abschließenden Austrennen des Fertigteils 16 aus dem Rohblech 15. In die Position gemäß Figur 12 war die Saugerplatte 26a zuvor bewegt worden, sobald die Bewegungseinheit 5 im Laufe des Trennprozesses eine Position erreicht hatte, bei welcher ein hinreichend großer, von dem Restgitter 17 bereits getrennter Bereich des Fertigteils 16 für die Saugerplatte 26a zugänglich war. In Figur 12 ist die Saugerplatte 26a an der von der Werkstückauflage 7 abliegenden Seite des Fertigteils 16 derart angeordnet, dass die Saugerplatte 26a senkrecht zu der Werkstückhauptebene einen Abstand von dem Restgitter 17 aufweist, der kleiner ist als die Dicke des Fertigteils 16.

Wird das Fertigteil 16 beim abschließenden Austrennen aus dem Rohblech 15 durch den Schneidgasstrahl beaufschlagt, der auf die Bearbeitungsstelle des von dem Laserschneidkopf 6 auf das Rohblech 15 gerichteten Laserstrahls aufgegeben wird, so bildet die Saugerplatte 26a ein Widerlager für das Fertigteil 16. Als solches sorgt die Saugerplatte 26a dafür, dass das vollständig ausgetrennte Fertigteil 16 nicht unter der Wirkung des Schneidgasstrahls verkippt und zumindest teilweise auf oder unter dem das Fertigteil 16 umgebenden Restgitter 17 zu liegen kommt und dadurch den sich an das abschließende Austrennen des Fertigteils 16 anschließenden Transfer des Fertigteils 16 und des Restgitters 17 zu der Entladeseite der maschinellen Anordnung 1 behindert.

Ist das durch die Saugerplatte 26a gegen eine Fehlausrichtung gesicherte Fertigteil 16 abschließend aus dem Rohblech 15 ausgetrennt, so verfährt die motorisch angetriebene Querschiene 12 aus der Position gemäß Figur 12 nach rechts in die Position gemäß Figur 13. Dadurch wird das Restgitter 17 gemeinsam mit dem Fertigteil 16 bewegt, bis das Fertigteil 16 in die Umschlagposition überführt ist. Die Saugerplatte 26a wird durch die Führungsschiene 21 parallel zu dem Restgitter 17 und dem Fertigteil 16 bewegt. In der Umschlagposition liegt das Fertigteil 16 auch unterhalb der an der Führungsschiene 21a angebrachten Saugerplatte 26b. Es ergeben sich damit am Ende der Transferbewegung die Verhältnisse gemäß Figur 13.

Die Saugerplatte 26b kann nunmehr in Richtung auf das Fertigteil 16 abgesenkt werden und ein zusätzliches Widerlager für das Fertigteil 16 bilden. Ebenso wie die Saugerplatte 26a ist auch die Saugerplatte 26b an der von der Werkstückauflage 7 abliegenden Seite des Fertigteils 16 derart angeordnet, dass sie senkrecht zu der Werkstückhauptebene einen Abstand von dem Restgitter 17 aufweist, der kleiner ist als die Dicke des Fertigteils 16.

Zum Abführen des Fertigteils 16 von der Werkstückauflage 7 werden die Saugerplatten 26a, 26b gemeinsam genutzt. Der Abführvorgang entspricht dem zu den Figuren 1 bis 11 beschriebenen Abführvorgang. Die Saugerplatten 26a, 26b sind dementsprechend Teil einer Abführvorrichtung und wirken mit unterhalb der Werkstückauflage 7 angeordneten Aushebeeinheiten zusammen, die ihrer Bau- und Funktionsweise nach mit den Aushebeeinheiten 42, 43, 44 der Figuren 1 bis 8 übereinstimmen.

Alternativ kann die Saugerplatte 26b bereits vor oder im Laufe der Bewegung der Querschiene 12 an der von der Werkstückauflage 7 abliegenden Seite des Fertigteils 16 derart angeordnet werden, dass sie senkrecht zu der Werkstückhauptebene einen Abstand von dem Restgitter 17 aufweist, der kleiner ist als die Dicke des Fertigteils 16. Ist die Saugerplatte 26b bereits vor der Bewegung der Querschiene 12 an dem Fertigteil 16 anzuordnen, so wird zuvor die Bewegungseinheit 5 mit dem Laserschneidkopf 6 entlang des Portalquerträgers 55 in dem Arbeitsbereich 54 der Laserschneidmaschine 2 aus einem Kollisionsbereich mit der Saugerplatte 26b bewegt. Wird nun in der vorstehend zu den Figuren 1 bis 11 beschriebenen Weise das Fertigteil 16 gemeinsam mit dem Restgitter 17 über die Werkstückauflage 7 in der Bewegungsrichtung 52 zu der Entladeseite der maschinellen Anordnung 1 bewegt, so sorgen die Saugerplatte 26a und die Saugerplatte 26b gemeinsam dafür, dass das Fertigteil 16 gegenüber dem Restgitter 17 eine Position beibehält, bei welcher ein störungsfreier Transfer des Fertigteils 16 und des Restgitters 17 gewährleistet ist und welche nach dem Erreichen der Umschlagposition durch das Fertigteil 16 ein störungsfreies Abführen des in die Umschlagposition bewegten Fertigteils 16 von der Werkstückauflage 7 ermöglicht.

Zum Abführen des Fertigteils 16 von der Werkstückauflage 7 können die Saugerplatten 26a, 26b wiederum gemeinsam genutzt werden. Alternativ ist es aber auch möglich, dass nur die Saugerplatte 26b zum Abführen des Fertigteils 16 von der Werkstückauflage 7 genutzt wird, wenn beispielsweise das Fertigteil 16 im Bereich der Saugerplatte 26a eine Lochung aufweist, so dass es nicht sicher genug an der Saugerplatte 26a fixierbar ist.

Abweichend von den in den Figuren 12 und 13 dargestellten Verhältnissen kann an dem Kragarm 20 der maschinellen Anordnung 1 zusätzlich zu den Führungsschienen 21, 21a wenigstens eine weitere, mit den Führungsschienen 21, 21a baugleiche Führungsschiene mit Widerlagereinheiten und zugehörigen Saugerplatten angebracht und motorisch angetrieben in Richtung des Doppelpfeils 25 relativ zu dem Kragarm 20 zustellbar sein. Abgestimmt auf die Saugerplatten 26a, 26b lässt sich auch die entsprechende Saugerplatte an der weiteren Führungsschiene nutzen, um ein mittels der Laserschneidmaschine 2 aus einem Rohblech ausgetrenntes Fertigteil beim abschließenden Austrennen und/oder beim daran anschließenden Transfer in eine Umschlagposition gegen eine Fehlausrichtung gegenüber einem Restgitter zu sichern und/oder um das in die Umschlagposition transferierte Fertigteil unter Umständen gemeinsam mit wenigstens einer der Saugerplatten 26a, 26b von der Werkstückauflage 7 abzuführen.

## Patentansprüche

1. Verfahren zum Bewegen eines aus einem plattenartigen Werkstück (15), insbesondere einem Blech, unter zusätzlicher Erzeugung eines Restwerkstücks (17) ausgetrennten Werkstückausschnitts (16) in einer Bewegungsrichtung (52) parallel zu einer Werkstückhauptebene (53) des plattenartigen Werkstücks (15) über eine sich parallel zu der Werkstückhauptebene (53) erstreckende Werkstückauflage (7), auf welcher das Restwerkstück (17) und der Werkstückausschnitt (16) senkrecht zu der Werkstückhauptebene (53) gelagert sind, wobei der Werkstückausschnitt (16) senkrecht zu der Werkstückhauptebene (53) eine Dicke (d) besitzt und das Restwerkstück (17) und der Werkstückausschnitt (16) parallel zu der Werkstückhauptebene (53) nebeneinander und senkrecht zu der Werkstückhauptebene (53) mit gegenseitiger Überdeckung angeordnet sind und wobei der Werkstückausschnitt (16) in der Bewegungsrichtung (52) bewegt wird, indem das Restwerkstück (17) in der Bewegungsrichtung (52) angetrieben wird und dabei den an dem Restwerkstück (17) parallel zu der Werkstückhauptebene (53) abgestützten Werkstückausschnitt (16) in der Bewegungsrichtung (52) mitnimmt, **dadurch gekennzeichnet, dass** mit dem Werkstückausschnitt (16) ein an der von der Werkstückauflage (7) abliegenden Seite des Werkstückausschnitts (16) angeordnetes und senkrecht zu der Werkstückhauptebene (53) wirksames Widerlager (26, 27; 26a, 26b) für den Werkstückausschnitt (16) in der Bewegungsrichtung (52) bewegt wird, wobei das Widerlager (26, 27; 26a, 26b) und das Restwerkstück (17) senkrecht zu der Werkstückhauptebene (53) maximal einen Abstand voneinander aufweisen, der kleiner ist als die Dicke (d) des Werkstückausschnitts (16).

2. Verfahren nach Anspruch 1, **dadurch gekennzeichnet, dass** mit dem Werkstückausschnitt (16) ein Widerlager (26, 27; 26a, 26b) für den Werkstückausschnitt (16) in der Bewegungsrichtung (52) bewegt wird, welches aufgrund von senkrecht zu der Werkstückhauptebene (53) ausgeführten Bewegungen des Werkstückausschnitts (16) gegen die Wirkung einer Rückstellkraft auslenkbar ist, wobei das ausgelenkte Widerlager (26, 27; 26a, 26b) und das Restwerkstück (17) senkrecht zu der Werkstückhauptebene (53) einen Abstand voneinander aufweisen, der kleiner ist als die Dicke des Werkstückausschnitts (16) und/oder dass mit dem Werkstückausschnitt (16) ein senkrecht zu der Werkstückhauptebene (53) elastisches Widerlager (26, 27; 26a, 26b) für den Werkstückausschnitt (16) in der Bewegungsrichtung (52) bewegt wird, welches aufgrund von senkrecht zu der Werkstückhauptebene (53) ausgeführten Bewegungen des Werkstückausschnitts (16) gegen die Wirkung einer Rückstellkraft elastisch verformbar ist, wobei das elastisch verformte Widerlager (26, 27; 26a, 26b) und das Restwerkstück (17) senkrecht zu der Werkstückhauptebene (53) einen Abstand voneinander aufweisen, der kleiner ist als die Dicke des Werkstückausschnitts (16).

3. Verfahren zum Entladen eines aus einem plattenartigen Werkstück (15), insbesondere einem Blech, unter zusätzlicher Erzeugung eines Restwerkstücks (17) ausgetrennten Werkstückausschnitts (16) von einer sich parallel zu einer Werkstückhauptebene (53) des plattenartigen Werkstücks (15) erstreckenden Werkstückauflage (7), im Rahmen dessen der Werkstückausschnitt (16) in einer Bewegungsrichtung (52) parallel zu der Werkstückhauptebene (53) über die Werkstückauflage (7) in eine Umschlagposition bewegt wird, ehe der in die Umschlagposition bewegte Werkstückausschnitt (16) mit einer Abführbewegung senkrecht zu der Werkstückhauptebene (53) von der Werkstückauflage (7) abgeführt wird, **dadurch gekennzeichnet, dass** der Werkstückausschnitt (16) nach dem Verfahren gemäß Patentanspruch 1 oder Patentanspruch 2 in die Umschlagposition bewegt wird.

4. Verfahren nach Anspruch 3, **dadurch gekennzeichnet, dass** der in die Umschlagposition bewegte Werkstückausschnitt (16) mittels des Widerlagers (26, 27; 26a, 26b) für den Werkstückausschnitt (16) von der Werkstückauflage (7) abgeführt wird.

5. Verfahren nach Anspruch 4, **dadurch gekennzeichnet, dass** der in die Umschlagposition bewegte Werkstückausschnitt (16) an der von dem Widerlager (26, 27; 26a, 26b) für den Werkstückausschnitt (16) abliegenden Seite durch eine Aushebevorrichtung (45, 46) senkrecht zu der Werkstückhauptebene (53) gegen das Widerlager (26, 27; 26a, 26b) beaufschlagt wird und dass der einerseits durch die Aushebevorrichtung (45, 46) beaufschlagte und andererseits durch das Widerlager (26, 27; 26a, 26b) abgestützte Werkstückausschnitt (16) durch eine gemeinsame, senkrecht zu der Werkstückhauptebene (53) ausgeführte Bewegung der Aushebevorrichtung (45, 46) und des Widerlagers (26, 27; 26a, 26b) mit der Abführbewegung von der Werkstückauflage (7) abgeführt wird, wobei der Werkstückausschnitt (16) während der Abführbewegung durch die Aushebevorrichtung (45, 46) und/oder das Widerlager (26, 27; 26a, 26b) vorzugsweise parallel zu der Werkstückhauptebene (53) ausgerichtet wird.

6. Verfahren nach Anspruch 4 oder Anspruch 5, **dadurch gekennzeichnet, dass** das Widerlager (26, 27; 26a, 26b) für den Werkstückausschnitt (16) während der Bewegung des Werkstückausschnitts (16) in die Umschlagposition in einen Transferzustand und zum Abführen des Werkstückausschnitts (16) von der Werkstückauflage (7) in einen von dem Transferzustand verschiedenen Abführzustand überführt wird.

7. Fertigungsverfahren, im Rahmen dessen in einem Arbeitsbereich (54) einer Werkzeugmaschine (2) aus einem plattenartigen Werkstück (15), insbesondere einem Blech, unter zusätzlicher Erzeugung eines Restwerkstücks (17) ein Werkstückausschnitt (16) ausgetrennt wird, ehe der Werkstückausschnitt (16) aus dem Arbeitsbereich (54) der Werkzeugmaschine (2) über eine sich parallel zu einer Werkstückhauptebene (53) des plattenartigen Werkstücks (15) erstreckende Werkstückauflage (7) in eine Position abseits des Arbeitsbereichs (54) der Werkzeugmaschine (2), insbesondere in eine Umschlagposition, bewegt wird, **dadurch gekennzeichnet, dass** der Werkstückausschnitt (16) nach dem Verfahren gemäß Patentanspruch 1 oder Patentanspruch 2 aus dem Arbeitsbereich (54) der Werkzeugmaschine (2) in die Position abseits des Arbeitsbereichs (54) der Werkzeugmaschine (2), insbesondere in die Umschlagposition, bewegt wird.

8. Fertigungsverfahren, im Rahmen dessen in einem Arbeitsbereich (54) einer Werkzeugmaschine (2) aus einem plattenartigen Werkstück (15), insbesondere einem Blech, unter zusätzlicher Erzeugung eines Restwerkstücks (17) ein Werkstückausschnitt (16) ausgetrennt wird, ehe der Werkstückausschnitt (16) von einer sich parallel zu einer Werkstückhauptebene (53) des plattenartigen Werkstücks (15) erstreckenden Werkstückauflage (7) entladen wird, **dadurch gekennzeichnet, dass** der Werkstückausschnitt (16) nach dem Verfahren gemäß einem der Ansprüche 3 bis 6 von der Werkstückauflage (7) entladen wird.

9. Fertigungsverfahren nach Anspruch 7 oder Anspruch 8, **dadurch gekennzeichnet, dass** ein Widerlager (26a) für den Werkstückausschnitt (16) an der von der Werkstückauflage (7) abliegenden Seite des Werkstückausschnitts (16) derart angeordnet wird, dass das Widerlager (26a) und das Restwerkstück (17) beim abschließenden Austrennen des Werkstückausschnitts (16) aus dem plattenartigen Werkstück (15) senkrecht zu der Werkstückhauptebene (53) maximal einen Abstand voneinander aufweisen, der kleiner ist als die Dicke (d) des Werkstückausschnitts (16).

10. Fertigungsverfahren nach Anspruch 9, **dadurch gekennzeichnet, dass** das Widerlager (26a) für den Werkstückausschnitt (16) beim abschließenden Austrennen des Werkstückausschnitts (16) aus dem plattenartigen Werkstück (15) nach dem abschließenden Austrennen mit dem Werkstückausschnitt (16) in der Bewegungsrichtung (52) bewegt wird und dabei von dem Restwerkstück (17) senkrecht zu der Werkstückhauptebene (53) maximal einen Abstand aufweist, der kleiner ist als die Dicke (d) des Werkstückausschnitts (16).

11. Fertigungsverfahren nach Anspruch 9 oder Anspruch 10, **dadurch gekennzeichnet, dass** das Widerlager (26a) für den Werkstückausschnitt (16) beim abschließenden Austrennen des Werkstückausschnitts (16) aus dem plattenartigen Werkstück (15) als Widerlager (26a) für das abschließende Austrennen vorgesehen ist und dass nach dem abschließenden Austrennen des Werkstückausschnitts (16) aus dem plattenartigen Werkstück (15) ein von dem Widerlager (26a) für das abschließende Austrennen verschiedenes zusätzliches Widerlager (26b) für den Werkstückausschnitt (16) an der von der Werkstückauflage (7) abliegenden Seite des Werkstückausschnitts (16) derart angeordnet wird, dass das zusätzliche Widerlager (26b) und das Restwerkstück (17) senkrecht zu der Werkstückhauptebene (53) maximal einen Abstand voneinander aufweisen, der kleiner ist als die Dicke (d) des Werkstückausschnitts (16).

12. Fertigungsverfahren nach Anspruch 11, **dadurch gekennzeichnet, dass** das zusätzliche Widerlager (26b) für den Werkstückausschnitt (16) an der von der Werkstückauflage (7) abliegenden Seite des Werkstückausschnitts (16) angeordnet wird, ehe der Werkstückausschnitt (16) in der Bewegungsrichtung (52) bewegt wird.

13. Fertigungsverfahren nach Anspruch 11 oder Anspruch 12, **dadurch gekennzeichnet, dass** das zusätzliche Widerlager (26b) für den Werkstückausschnitt (16) nach dem abschließenden Austrennen mit dem Werkstückausschnitt (16) in der Bewegungsrichtung (52) bewegt wird und dabei von dem Restwerkstück (17) senkrecht zu der Werkstückhauptebene (53) maximal einen Abstand aufweist, der kleiner ist als die Dicke (d) des Werkstückausschnitts (16).

14. Fertigungsverfahren nach Anspruch 8 und außerdem nach Anspruch 12 und/oder Anspruch 13, **dadurch gekennzeichnet, dass** der in die Umschlagposition bewegte Werkstückausschnitt (16) mittels des zusätzlichen Widerlagers (26b) für den Werkstückausschnitt (16) von der Werkstückauflage (7) abgeführt wird und dass das zusätzliche Widerlager (26b) vor der Bewegung des Werkstückausschnitts (16) in der Bewegungsrichtung (52) an der von der Werkstückauflage (7) abliegenden Seite des Werkstückausschnitts (16) parallel zu der Werkstückhauptebene (53) derart angeordnet wird und/oder dass das zusätzliche Widerlager (26b) nach dem abschließenden Austrennen mit dem Werkstückausschnitt (16) in der Bewegungsrichtung (52) derart bewegt wird, dass das zusätzliche Widerlager (26b) bei Erreichen der Umschlagposition durch den Werkstückausschnitt (16) an der von der Werkstückauflage (7) abliegenden Seite des Werkstückausschnitts (16) derart angeordnet ist, dass der Werkstückausschnitt (16) mittels des zusätzlichen Widerlagers (26b) durch ausschließlich senkrecht zu der Werkstückhauptebene (53) gerichtete Bewegung des zusätzlichen Widerlagers von der Werkstückauflage (7) abführbar ist.

15. Vorrichtung zum Bewegen eines aus einem plattenartigen Werkstück (15), insbesondere einem Blech, unter zusätzlicher Erzeugung eines Restwerkstücks (17) ausgetrennten Werkstückausschnitts (16) in einer Bewegungsrichtung (52) parallel zu einer Werkstückhauptebene (53) des plattenartigen Werkstücks (15), wobei der Werkstückausschnitt (16) senkrecht zu der Werkstückhauptebene (53) eine Dicke (d) besitzt,
• mit einer sich parallel zu der Werkstückhauptebene (53) erstreckenden Werkstückauflage (7), auf welcher das Restwerkstück (17) und der Werkstückausschnitt (16) senkrecht zu der Werkstückhauptebene (53) derart lagerbar sind, dass das Restwerkstück (17) und der Werkstückausschnitt (16) parallel zu der Werkstückhauptebene (53) nebeneinander und senkrecht zu der Werkstückhauptebene (53) mit gegenseitiger Überdeckung angeordnet sind sowie
• mit einem Restwerkstückantrieb (50), mittels dessen das Restwerkstück (17) unter Mitnahme des an dem Restwerkstück (17) parallel zu der Werkstückhauptebene (53) abgestützten Werkstückausschnitts (16) in der Bewegungsrichtung (52) antreibbar ist,
**dadurch gekennzeichnet, dass**
an der von der Werkstückauflage (7) abliegenden Seite des Werkstückausschnitts (16) ein senkrecht zu der Werkstückhauptebene (53) wirksames Widerlager (26, 27; 26a, 26b) für den Werkstückausschnitt (16) vorgesehen ist, welches mit dem Werkstückausschnitt (16) in der Bewegungsrichtung (52) bewegbar ist, wobei das Widerlager (26, 27; 26a, 26b) und das Restwerkstück (17) während der Bewegung in der Bewegungsrichtung (52) senkrecht zu der Werkstückhauptebene (53) maximal einen Abstand voneinander aufweisen, der kleiner ist als die Dicke (d) des Werkstückausschnitts (16).

16. Vorrichtung zum Entladen eines aus einem plattenartigen Werkstück (15), insbesondere einem Blech, unter zusätzlicher Erzeugung eines Restwerkstücks (17) ausgetrennten Werkstückausschnitts (16) von einer sich parallel zu einer Werkstückhauptebene (53) des plattenartigen Werkstücks (15) erstreckenden Werkstückauflage (7),
• mit einer Transfervorrichtung, mittels derer der Werkstückausschnitt (16) in einer Bewegungsrichtung (52) parallel zu der Werkstückhauptebene (53) über die Werkstückauflage (7) in eine Umschlagposition bewegbar ist sowie
• mit einer Abführvorrichtung (26, 27, 26a, 26b, 42, 43), mittels derer der in die Umschiagposition bewegte Werkstückausschnitt (16) mit einer Abführbewegung senkrecht zu der Werkstückhauptebene (53) von der Werkstückauflage (7) abführbar ist,
**dadurch gekennzeichnet, dass**
als Transfervorrichtung (12, 50) die Vorrichtung nach Anspruch 15 vorgesehen ist.

17. Vorrichtung nach Anspruch 16, **dadurch gekennzeichnet, dass** die Abführvorrichtung (26, 27, 26a, 26b, 42, 43) das für den Werkstückausschnitt (16) vorgesehene Widerlager (26, 27; 26a, 26b) der Transfervorrichtung umfasst.

18. Vorrichtung nach Anspruch 17, **dadurch gekennzeichnet, dass** die Abführvorrichtung (26, 27, 26a, 26b, 42, 43) eine senkrecht zu der Werkstückhauptebene (53) bewegbare Aushebevorrichtung (45, 46) umfasst, welche der von dem Widerlager (26, 27; 26a, 26b) für den Werkstückausschnitt (16) abliegenden Seite des in die Umschlagposition bewegten Werkstückausschnitts (16) zugeordnet ist und mittels derer der in die Umschlagposition bewegte Werkstückausschnitt (16) senkrecht zu der Werkstückhauptebene (53) gegen das Widerlager (26, 27; 26a, 26b) beaufschlagbar ist, wobei der einerseits durch die Aushebevorrichtung (45, 46) beaufschlagte und andererseits durch das Widerlager (26, 27; 26a, 26b) abgestützte Werkstückausschnitt (16) durch eine gemeinsame, senkrecht zu der Werkstückhauptebene (53) ausgeführte Bewegung der Aushebevorrichtung (45, 46) und des Widerlagers (26, 27; 26a, 26b) mit der Abführbewegung von der Werkstückauflage (7) abführbar ist, wobei während der Abführbewegung der Werkstückausschnitt (16) durch die Aushebevorrichtung (45, 46) und/oder das Widerlager (26, 27; 26a, 26b) vorzugsweise parallel zu der Werkstückhauptebene (53) ausrichtbar ist.

19. Vorrichtung nach Anspruch 17 oder Anspruch 18, **dadurch gekennzeichnet, dass** das Widerlager (26, 27; 26a, 26b) für den Werkstückausschnitt (16) für die Bewegung des Werkstückausschnitts (16) in die Umschlagposition in einen Transferzustand und zum Abführen des Werkstückausschnitts (16) von der Werkstückauflage (7) in einen von dem Transferzustand verschiedenen Abführzustand überführbar ist.

20. Maschinelle Anordnung für die Fertigung, mit einer Werkzeugmaschine (2), mittels derer in einem Arbeitsbereich (54) der Werkzeugmaschine (2) aus einem plattenartigen Werkstück (15), insbesondere einem Blech, unter zusätzlicher Erzeugung eines Restwerkstücks (17) ein Werkstückausschnitt (16) austrennbar ist sowie mit einer Transfervorrichtung, mittels derer der Werkstückausschnitt (16) in einer Bewegungsrichtung (52) parallel zu einer Werkstückhauptebene (53) des plattenartigen Werkstücks (15) aus dem Arbeitsbereich (54) der Werkzeugmaschine (2) in eine Position abseits des Arbeitsbereichs (54) der Werkzeugmaschine (2), insbesondere in eine Umschlagposition, bewegbar ist, **dadurch gekennzeichnet, dass** als Transfervorrichtung die Vorrichtung nach Anspruch 15 vorgesehen ist.

21. Maschinelle Anordnung für die Fertigung, mit einer Werkzeugmaschine (2), mittels derer in einem Arbeitsbereich (54) der Werkzeugmaschine (2) aus einem plattenartigen Werkstück (15), insbesondere einem Blech, unter zusätzlicher Erzeugung eines Restwerkstücks (17) ein Werkstückausschnitt (16) austrennbar ist sowie mit einer Entladevorrichtung, mittels derer der Werkstückausschnitt (16) von einer sich parallel zu einer Werkstückhauptebene (53) des plattenartigen Werkstücks (15) erstreckenden Werkstückauflage (7) der maschinellen Anordnung entladbar ist, **dadurch gekennzeichnet, dass** als Entladevorrichtung die Vorrichtung nach einem der Ansprüche 16 bis 19 vorgesehen ist.

22. Maschinelle Anordnung nach Anspruch 20 oder Anspruch 21, **dadurch gekennzeichnet, dass** ein Widerlager (26a) für den Werkstückausschnitt (16) beim abschließenden Austrennen des Werkstückausschnitts (16) aus dem plattenartigen Werkstück (15) an der von der Werkstückauflage (7) abliegenden Seite des Werkstückausschnitts (16) derart anordenbar ist, dass das Widerlager (26a) und das Restwerkstück (17) senkrecht zu der Werkstückhauptebene (53) maximal einen Abstand voneinander aufweisen, der kleiner ist als die Dicke (d) des Werkstückausschnitts (16).

23. Maschinelle Anordnung nach Anspruch 22, **dadurch gekennzeichnet, dass** das Widerlager (26a) für den Werkstückausschnitt (16) beim abschließenden Austrennen des Werkstückausschnitts (16) aus dem plattenartigen Werkstück (15) nach dem abschließenden Austrennen mit dem Werkstückausschnitt (16) in der Bewegungsrichtung (52) bewegbar ist und dabei von dem Restwerkstück (17) senkrecht zu der Werkstückhauptebene (53) maximal einen Abstand aufweist, der kleiner ist als die Dicke (d) des Werkstückausschnitts (16).

24. Maschinelle Anordnung nach Anspruch 22 oder Anspruch 23, **dadurch gekennzeichnet, dass** das Widerlager (26a) für den Werkstückausschnitt (16) beim abschließenden Austrennen des Werkstückausschnitts (16) aus dem plattenartigen Werkstück (15) als Widerlager (26a) für das abschließende Austrennen vorgesehen ist und dass außerdem ein von dem Widerlager (26a) für das abschließende Austrennen verschiedenes zusätzliches Widerlager (26b) für den Werkstückausschnitt (16) vorgesehen ist, welches nach dem abschließenden Austrennen des Werkstückausschnitts (16) aus dem plattenartigen Werkstück (15) an der von der Werkstückauflage (7) abliegenden Seite des Werkstückausschnitts (16) derart anordenbar ist, dass das zusätzliche Widerlager (26b) und das Restwerkstück (17) senkrecht zu der Werkstückhauptebene (53) maximal einen Abstand voneinander aufweisen, der kleiner ist als die Dicke (d) des Werkstückausschnitts (16).

25. Maschinelle Anordnung nach Anspruch 24, **dadurch gekennzeichnet, dass** das zusätzliche Widerlager (26b) für den Werkstückausschnitt (16) nach dem abschließenden Austrennen des Werkstückausschnitts (16) mittels eines Widerlagerantriebs mit dem Werkstückausschnitt (16) in der Bewegungsrichtung (52) bewegbar ist und dabei von dem Restwerkstück (17) senkrecht zu der Werkstückhauptebene (53) maximal einen Abstand aufweist, der kleiner ist als die Dicke (d) des Werkstückausschnitts (16).

26. Maschinelle Anordnung nach Anspruch 21 und außerdem Anspruch 24 und/oder Anspruch 25, **dadurch gekennzeichnet, dass** die Entladevorrichtung, mittels derer der Werkstückausschnitt (16) von einer sich parallel zu einer Werkstückhauptebene (53) des plattenartigen Werkstücks (15) erstreckenden Werkstückauflage (7) der maschinellen Anordnung entladbar ist, das zusätzliche Widerlager (26b) für den Werkstückausschnitt (16) umfasst.

## Claims

1. Method for moving a workpiece cutout (16), which has been separated from a plate-like workpiece (15), in particular a metal sheet, while additionally producing a residual workpiece (17), in a direction of movement (52) parallel to a workpiece main plane (53) of the plate-like workpiece (15), over a workpiece support (7) which extends parallel to the workpiece main plane (53), on which support the residual workpiece (17) and the workpiece cutout are supported (16) perpendicularly to the workpiece main plane (53), the workpiece cutout (16) having a thickness (d) perpendicular to the workpiece main plane (53), and the residual workpiece (17) and the workpiece cutout (16) being arranged adjacent to one another parallel to the workpiece main plane (53), and overlapping one another perpendicularly to the workpiece main plane (53), and the workpiece cutout (16) being moved in the direction of movement (52) by the residual workpiece (17) being driven in the direction of movement (52) and carrying the workpiece cutout (16) along in the direction of movement (52), which cutout is supported on the residual workpiece (17) parallel to the workpiece main plane (53), **characterized in that** an abutment (26, 27; 26a, 26b) for the workpiece cutout (16) is moved together with the workpiece cutout (16) in the direction of movement (52), which abutment is arranged on the side of the workpiece cutout (16) that is remote from the workpiece support (7), and acts perpendicularly to the workpiece main plane (53), the abutment (26, 27; 26a, 26b) and the residual workpiece (17) having a maximum spacing from one another, perpendicular to the workpiece main plane (53), that is smaller than the thickness (d) of the workpiece cutout (16).

2. Method according to claim 1, **characterized in that** an abutment (26, 27; 26a, 26b) for the workpiece cutout (16) is moved together with the workpiece cutout (16) in the direction of movement (52), which abutment, due to movements of the workpiece cutout (16) carried out perpendicularly to the workpiece main plane (53), can be deflected against the action of a restoring force, the deflected abutment (26, 27; 26a, 26b) and the residual workpiece (17) having a spacing from one another, perpendicular to the workpiece main plane (53), that is smaller than the thickness of the workpiece cutout (16), and/or **in that** an abutment (26, 27; 26a, 26b) for the workpiece cutout (16), is moved together with the workpiece cutout (16) in the direction of movement (52), which abutment is elastic perpendicular to the workpiece main plane (53) and can be elastically deformed against the action of a restoring force due to movements of the workpiece cutout (16) carried out perpendicularly to the workpiece main plane (53), the elastically deformed abutment (26, 27; 26a, 26b) and the residual workpiece (17) having a spacing from one another, perpendicular to the workpiece main plane (53), that is smaller than the thickness of the workpiece cutout (16).

3. Method for unloading a workpiece cutout (16), which has been separated from a plate-like workpiece (15), in particular a metal sheet, while additionally producing a residual workpiece (17), from a workpiece support (7) which extends parallel to a workpiece main plane (53) of the plate-like workpiece (15), in the course of which method the workpiece cutout (16) is moved, in a direction of movement (52) parallel to the workpiece main plane (53), over the workpiece support (7) into a handling position, before the workpiece cutout (16) moved into the handling position is removed from the workpiece support (7) by a removal movement perpendicular to the workpiece main plane (53), **characterized in that** the workpiece cutout (16) is moved into the handling position using the method according to either claim 1 or claim 2.

4. Method according to claim 3, **characterized in that** the workpiece cutout (16) moved into the handling position is removed from the workpiece support (7) by means of the abutment (26, 27; 26a, 26b) for the workpiece cutout (16).

5. Method according to claim 4, **characterized in that**, on the side which is remote from the abutment (26, 27; 26a, 26b) for the workpiece cutout (16), the workpiece cutout (16) moved into the handling position is pressed against the abutment (26, 27; 26a, 26b) perpendicularly to the workpiece main plane (53) by a lifting device (45, 46), and **in that** the workpiece cutout (16) which on one side is acted on by the lifting device (45, 46) and on the other side is supported by the abutment (26, 27; 26a, 26b) is removed from the workpiece support (7) by means of the removal movement, by a common movement of the lifting device (45, 46) and of the abutment (26, 27; 26a, 26b) perpendicular to the workpiece main plane (53), the workpiece cutout (16) preferably being aligned parallel to the workpiece main plane (53) by the lifting device (45, 46) and/or the abutment (26, 27; 26a, 26b) during the removal movement.

6. Method according to either claim 4 or claim 5, **characterized in that** the abutment (26, 27; 26a, 26b) for the workpiece cutout (16) is transferred into a transfer state during the movement of the workpiece cutout (16) into the handling position and into a removal state which is different from the transfer state in order to remove the workpiece cutout (16) from the workpiece support (7).

7. Production method, in the course of which, in a working region (54) of a machine tool (2), a workpiece cutout (16) is separated from a plate-like workpiece (15), in particular a metal sheet, while additionally producing a residual workpiece (17), before the workpiece cutout (16) is moved out of the working region (54) of the machine tool (2), over a workpiece support (7) which extends parallel to a workpiece main plane (53) of the plate-like workpiece (15), into a position away from the working region (54) of the machine tool (2), in particular into a handling position, **characterized in that** the workpiece cutout (16) is moved out of the working region (54) of the machine tool (2) into the position away from the working region (54) of the machine tool (2), in particular into the handling position, using the method according either claim 1 or claim 2.

8. Production method, in the course of which, in a working region (54) of a machine tool (2), a workpiece cutout (16) is separated from a plate-like workpiece (15), in particular a metal sheet, while additionally producing a residual workpiece (17), before the workpiece cutout (16) is unloaded from a workpiece support (7) which extends parallel to a workpiece main plane (53) of the plate-like workpiece (15), **characterized in that** the workpiece cutout (16) is unloaded from of the workpiece support (7) using the method according to any of claims 3 to 6.

9. Production method according to either claim 7 or claim 8, **characterized in that** an abutment (26a) for the workpiece cutout (16) is arranged on the side of the workpiece cutout (16) that is remote from the workpiece support (7), such that when the workpiece cutout (16) is finally separated from the plate-like workpiece (15), the abutment (26a) and the residual workpiece (17) have a maximum spacing from one another, perpendicular to the workpiece main plane (53), that is smaller than the thickness (d) of the workpiece cutout (16).

10. Production method according to claim 9, **characterized in that**, when the workpiece cutout (16) is finally separated from the plate-like workpiece (15), the abutment (26a) for the workpiece cutout (16) is moved together with the workpiece cutout (16) in the direction of movement (52) after the final separation, and in this case said abutment has a maximum spacing from the residual workpiece (17), perpendicular to the workpiece main plane (53), that is smaller than the thickness (d) of the workpiece cutout (16).

11. Production method according to either claim 9 or claim 10, **characterized in that** the abutment (26a) for the workpiece cutout (16) is provided as an abutment (26a) for the final separation when the workpiece cutout (16) is finally separated from the plate-like workpiece (15), and **in that**, after the final separation of the workpiece cutout (16) from the plate-like workpiece (15), an additional abutment (26b) for the workpiece cutout (16) that is different from the abutment (26a) for the final separation is arranged on the side of the workpiece cutout (16) that is remote from the workpiece support (7), such that the additional abutment (26b) and the residual workpiece (17) have a maximum spacing from one another, perpendicular to the workpiece main plane (53), that is smaller than the thickness (d) of the workpiece cutout (16).

12. Production method according to claim 11, **characterized in that** the additional abutment (26b) for the workpiece cutout (16) is arranged on the side of the workpiece cutout (16) that is remote from workpiece support (7), before the workpiece cutout (16) is moved in the direction of movement (52).

13. Production method according to either claim 11 or claim 12, **characterized in that**, after the final separation, the additional abutment (26b) for the workpiece cutout (16) is moved together with the workpiece cutout (16) in the direction of movement (52), and said abutment has a maximum spacing from the residual workpiece (17), perpendicular to the workpiece main plane (53), that is smaller than the thickness (d) of the workpiece cutout (16).

14. Production method according to claim 8 and also according to claim 12 and/or claim 13, **characterized in that** the workpiece cutout (16) moved into the handling position is removed from the workpiece support (7) by means of the additional abutment (26b) for the workpiece cutout (16), and **in that**, before the workpiece cutout (16) is moved in the direction of movement (52), the additional abutment (26b) is arranged parallel to the workpiece main plane (53), on the side of the workpiece cutout (16) that is remote from workpiece support (7), such that and/or **in that**, after the final separation, the additional abutment (26b) is moved together with the workpiece cutout (16) in the direction of movement (52) such that, when the workpiece cutout (16) reaches the handling position, the additional abutment (26b) is arranged on the side of the workpiece cutout (16) that is remote from workpiece support (7), such that the workpiece cutout (16) can be removed from the workpiece support (7) by means of the additional abutment (26b), by a movement of the additional abutment that is directed exclusively perpendicularly to the workpiece main plane (53).

15. Device for moving a workpiece cutout (16), which has been separated from a plate-like workpiece (15), in particular a metal sheet, while additionally producing a residual workpiece (17), in a direction of movement (52) parallel to a workpiece main plane (53) of the plate-like workpiece (15), the workpiece cutout (16) having a thickness (d) perpendicular to the workpiece main plane (53),
• comprising a workpiece support (7) which extends parallel to the workpiece main plane (53), on which support the residual workpiece (17) and the workpiece cutout (16) can be supported perpendicularly to the workpiece main plane (53) such that the residual workpiece (17) and the workpiece cutout (16) are arranged adjacent to one another parallel to the workpiece main plane (53), and overlapping one another perpendicular to the workpiece main plane (53), and
• comprising a residual workpiece drive (50), by means of which the residual workpiece (17) can be driven in the direction of movement (52) while carrying along the workpiece cutout (16) which is supported on the residual workpiece (17) parallel to the workpiece main plane (53),
**characterized in that**
an abutment (26, 27; 26a, 26b) for the workpiece cutout (16) that acts perpendicularly to the workpiece main plane (53) is provided on the side of the workpiece cutout (16) that is remote from the workpiece support (7), which abutment is movable together with the workpiece cutout (16) in the direction of movement (52), the abutment (26, 27; 26a, 26b) and the residual workpiece (17), during the movement in the direction of movement (52), having a maximum spacing from one another, perpendicular to the workpiece main plane (53), that is smaller than the thickness (d) of the workpiece cutout (16).

16. Device for unloading a workpiece cutout (16), which has been separated from a plate-like workpiece (15), in particular a metal sheet, while additionally producing a residual workpiece (17), from a workpiece support (7) which extends parallel to a workpiece main plane (53) of the plate-like workpiece (15),
• comprising a transfer device, by means of which the workpiece cutout (16) is movable in a direction of movement (52) parallel to the workpiece main plane (53), over the workpiece support (7) into a handling position, and
• comprising a removal device (26, 27, 26a, 26b, 42, 43), by means of which the workpiece cutout (16) moved into the handling position can be removed from the workpiece support (7) by a removal movement perpendicular to the workpiece main plane (53),
**characterized in that**
the device according to claim 15 is provided as the transfer device (12, 50).

17. Device according to claim 16, **characterized in that** the removal device (26, 27, 26a, 26b, 42, 43) comprises the abutment (26, 27; 26a, 26b) of the transfer device that is provided for the workpiece cutout (16).

18. Device according to claim 17, **characterized in that** the removal device (26, 27, 26a, 26b, 42, 43) comprises a lifting device (45, 46) which is movable perpendicularly to the workpiece main plane (53), which lifting device is associated with the side of the workpiece cutout (16), moved into the handling position, that is remote from the abutment (26, 27; 26a, 26b) for the workpiece cutout (16), and by means of which lifting device the workpiece cutout (16) moved into the handling position can be pressed against the abutment (26, 27; 26a, 26b) perpendicularly to the workpiece main plane (53), the workpiece cutout (16) which on one side is acted on by the lifting device (45, 46) and on the other side is supported by the abutment (26, 27; 26a, 26b) being removable from the workpiece support (7) by means of the removal movement, by a common movement of the lifting device (45, 46) and of the abutment (26, 27; 26a, 26b) that is carried out perpendicularly to the workpiece main plane (53), the workpiece cutout (16) being alignable, preferably parallel to the workpiece main plane (53), by the lifting device (45, 46) and/or the abutment (26, 27; 26a, 26b) during the removal movement.

19. Device according to either claim 17 or claim 18, **characterized in that** the abutment (26, 27; 26a, 26b) for the workpiece cutout (16) can be transferred into a transfer state for the movement of the workpiece cutout (16) into the handling position and into a removal state which is different from the transfer state in order to remove the workpiece cutout (16) from the workpiece support (7).

20. Machine arrangement for the production, comprising a machine tool (2), by means of which, in a working region (54) of the machine tool (2), a workpiece cutout (16) can be separated from a plate-like workpiece (15), in particular a metal sheet, while additionally producing a residual workpiece (17), and comprising a transfer device by means of which the workpiece cutout (16) is movable in a direction of movement (52) parallel to a workpiece main plane (53) of the plate-like workpiece (15), out of the working region (54) of the machine tool (2) into a position away from the working region (54) of the machine tool (2), in particular into a handling position, **characterized in that** the device according to claim 15 is provided as the transfer device.

21. Machine arrangement for the production, comprising a machine tool (2), by means of which, in a working region (54) of the machine tool (2), a workpiece cutout (16) can be separated from a plate-like workpiece (15), in particular a metal sheet, while additionally producing a residual workpiece (17), and comprising an unloading device, by means of which the workpiece cutout (16) can be unloaded from a workpiece support (7) of the machine arrangement that extends parallel to a workpiece main plane (53) of the plate-like workpiece (15), **characterized in that** the device according to any of claims 16 to 19 is provided as the unloading device.

22. Machine arrangement according to either claim 20 or claim 21, **characterized in that**, when the workpiece cutout (16) is finally separated from the plate-like workpiece (15), an abutment (26a) for the workpiece cutout (16) can be arranged on the side of the workpiece cutout (16) that is remote from the workpiece support (7), such that the abutment (26a) and the residual workpiece (17) have a maximum spacing from one another, perpendicular to the workpiece main plane (53), that is smaller than the thickness (d) of the workpiece cutout (16).

23. Machine arrangement according to claim 22, **characterized in that**, when the workpiece cutout (16) is finally separated from the plate-like workpiece (15), the abutment (26a) for the workpiece cutout (16) is movable together with the workpiece cutout (16) in the direction of movement (52) after the final separation, and in this case has a maximum spacing from the residual workpiece (17), perpendicular to the workpiece main plane (53), that is smaller than the thickness (d) of the workpiece cutout (16).

24. Production method according to either claim 22 or claim 23, **characterized in that** the abutment (26a) for the workpiece cutout (16) is provided as an abutment (26a) for the final separation when the workpiece cutout (16) is finally separated from the plate-like workpiece (15), and **in that** an additional abutment (26b) for the workpiece cutout (16) is also provided, which additional abutment is different from the abutment (26a) for the final separation and, after the final separation of the workpiece cutout (16) from the plate-like workpiece (15), can be arranged on the side of the workpiece cutout (16) that is remote from the workpiece support (7), such that the additional abutment (26b) and the residual workpiece (17) have a maximum spacing from one another, perpendicular to the workpiece main plane (53), that is smaller than the thickness (d) of the workpiece cutout (16).

25. Machine arrangement according to claim 24, **characterized in that**, after the final separation of the workpiece cutout (16), the additional abutment (26b) for the workpiece cutout (16) is movable together with the workpiece cutout (16) in the direction of movement (52) by means of an abutment drive, and in this case has a maximum spacing from the residual workpiece (17), perpendicular to the workpiece main plane (53), that is smaller than the thickness (d) of the workpiece cutout (16).

26. Machine arrangement according to claim 21 and also claim 24 and/or claim 25, **characterized in that** the unloading device, by means of which the workpiece cutout (16) can be unloaded from a workpiece support (7) of the machine assembly that extends parallel to a workpiece main plane (53) of the plate-like workpiece (15), comprises the additional abutment (26b) for the workpiece cutout (16).

## Revendications

1. Procédé pour mouvoir un flan découpé (16) séparé d'une pièce (15) du type plaque, en particulier d'une tôle, avec production additionnelle d'une pièce résiduelle (17), dans une direction de mouvement (52) parallèle à un plan principal (53) de ladite pièce (15) du type plaque, sur un plateau (7) repose-pièces qui s'étend parallèlement audit plan principal (53) de la pièce et sur lequel la pièce résiduelle (17), et le flan (16) découpé de la pièce, sont supportés perpendiculairement audit plan principal (53) de ladite pièce, sachant que ledit flan découpé (16) présente une épaisseur (d) perpendiculairement audit plan principal (53) de ladite pièce, et que ladite pièce résiduelle (17) et ledit flan découpé (16) sont placés en juxtaposition parallèlement audit plan principal (53) de la pièce, et avec recouvrement mutuel perpendiculairement audit plan principal (53) de ladite pièce, et sachant que ledit flan découpé (16) est mû dans la direction de mouvement (52), du fait que la pièce résiduelle (17) est entraînée dans ladite direction de mouvement (52) et charrie avec elle, dans ladite direction de mouvement (52), ledit flan découpé (16) prenant appui sur ladite pièce résiduelle (17) parallèlement audit plan principal (53) de la pièce, **caractérisé par le fait qu'**une contre-butée (26, 27 ; 26a, 26b) affectée au flan (16) découpé de la pièce, agissant perpendiculairement au plan principal (53) de ladite pièce et implantée du côté dudit flan découpé (16) qui pointe à l'opposé du plateau (7) repose-pièces, est mue dans la direction de mouvement (52) conjointement audit flan découpé (16), ladite contre-butée (26, 27 ; 26a, 26b) et la pièce résiduelle (17) étant espacées l'une de l'autre, perpendiculairement audit plan principal (53) de la pièce, au maximum d'une distance inférieure à l'épaisseur (d) dudit flan découpé (16).

2. Procédé selon la revendication 1, **caractérisé par** mouvoir dans la direction de mouvement (52), conjointement au flan (16) découpé de la pièce, une contre-butée (26, 27 ; 26a, 26b) qui est affectée audit flan découpé (16) et peut être déviée, en opposition à l'action d'une force de rappel, consécutivement à des mouvements exécutés par ledit flan découpé (16) perpendiculairement au plan principal (53) de ladite pièce, sachant que ladite contre-butée (26, 27 ; 26a, 26b) déviée, et la pièce résiduelle (17), sont espacées l'une de l'autre, perpendiculairement audit plan principal (53) de la pièce, d'une distance inférieure à l'épaisseur dudit flan découpé (16) ; et/ou par mouvoir dans ladite direction de mouvement (52), conjointement audit flan découpé (16), une contre-butée (26, 27 ; 26a, 26b) qui est affectée audit flan découpé (16), est douée d'élasticité perpendiculairement audit plan principal (53) de la pièce et peut être déformée élastiquement, en opposition à l'action d'une force de rappel, consécutivement à des mouvements exécutés par ledit flan découpé (16) perpendiculairement audit plan principal (53) de ladite pièce, sachant que ladite contre-butée (26, 27 ; 26a, 26b) déformée élastiquement, et la pièce résiduelle (17), sont espacées l'une de l'autre, perpendiculairement audit plan principal (53) de ladite pièce, d'une distance inférieure à l'épaisseur dudit flan découpé (16).

3. Procédé de déchargement d'un flan découpé (16) séparé d'une pièce (15) du type plaque, en particulier d'une tôle, avec production additionnelle d'une pièce résiduelle (17), à partir d'un plateau (7) repose-pièces s'étendant parallèlement à un plan principal (53) de ladite pièce (15) du type plaque, dans le cadre duquel ledit flan (16), découpé de la pièce, est mû vers un emplacement de manutention dans une direction de mouvement (52) parallèle audit plan principal (53) de la pièce, sur ledit plateau (7) repose-pièces, avant que ledit flan découpé (16), mû vers ledit emplacement de manutention, soit évacué dudit plateau (7) repose-pièces par un mouvement d'enlèvement, perpendiculairement audit plan principal (53) de la pièce, **caractérisé par le fait que** le flan (16), découpé de la pièce, est mû vers l'emplacement de manutention suivant le procédé conforme à la revendication 1 ou à la revendication 2.

4. Procédé selon la revendication 3, **caractérisé par le fait que** le flan (16), découpé de la pièce et mû vers l'emplacement de manutention, est évacué du plateau (7) repose-pièces au moyen de la contre-butée (26, 27 ; 26a, 26b) affectée audit flan découpé (16).

5. Procédé selon la revendication 4, **caractérisé par le fait que** le flan (16), découpé de la pièce et mû vers l'emplacement de manutention, est sollicité par un dispositif de soulèvement (45, 46) du côté pointant à l'opposé de la contre-butée (26, 27 ; 26a, 26b) affectée audit flan découpé (16), perpendiculairement au plan principal (53) de ladite pièce et en direction de ladite contre-butée (26, 27 ; 26a, 26b) ; et **par le fait que** ledit flan découpé (16), sollicité d'une part par ledit dispositif de soulèvement (45, 46) et soutenu d'autre part par ladite contre-butée (26, 27 ; 26a, 26b), est évacué du plateau (7) repose-pièces, par le mouvement d'enlèvement, sous l'effet d'un mouvement conjugué dudit dispositif de soulèvement (45, 46) et de ladite contre-butée (26, 27 ; 26a, 26b) exécuté perpendiculairement audit plan principal (53) de la pièce, sachant que, lors dudit mouvement d'enlèvement, ledit flan découpé (16) est orienté, par ledit dispositif de soulèvement (45, 46) et/ou par ladite contre-butée (26, 27 ; 26a, 26b), de préférence parallèlement audit plan principal (53) de ladite pièce.

6. Procédé selon la revendication 4 ou la revendication 5, **caractérisé par le fait que**, lors du mouvement du flan (16) découpé de la pièce, vers l'emplacement de manutention, la contre-butée (26, 27 ; 26a, 26b) affectée audit flan découpé (16) est transposée à un état de transfert et, en vue d'évacuer ledit flan découpé (16) du plateau (7) repose-pièces, à un état d'évacuation différant dudit état de transfert.

7. Procédé de fabrication dans le cadre duquel, dans une zone de travail (54) d'une machine-outil (2), un flan découpé (16) est séparé d'une pièce (15) du type plaque, en particulier d'une tôle, avec production additionnelle d'une pièce résiduelle (17), avant que ledit flan découpé (16) soit mû hors de ladite zone de travail (54) de la machine-outil (2), sur un plateau (7) repose-pièces s'étendant parallèlement à un plan principal (53) de la pièce (15) du type plaque, vers un emplacement situé à l'écart de ladite zone de travail (54) de ladite machine-outil (2), en particulier vers un emplacement de manutention, **caractérisé par le fait que** le flan (16), découpé de la pièce, est mû vers l'emplacement situé à l'écart de la zone de travail (54) de la machine-outil (2), en particulier vers l'emplacement de manutention, suivant le procédé conforme à la revendication 1 ou à la revendication 2.

8. Procédé de fabrication dans le cadre duquel, dans une zone de travail (54) d'une machine-outil (2), un flan découpé (16) est séparé d'une pièce (15) du type plaque, en particulier d'une tôle, avec production additionnelle d'une pièce résiduelle (17), avant que ledit flan découpé (16) soit déchargé à partir d'un plateau (7) repose-pièces s'étendant parallèlement à un plan principal (53) de ladite pièce (15) du type plaque, **caractérisé par le fait que** le flan (16), découpé de la pièce, est déchargé du plateau (7) repose-pièces suivant le procédé conforme à l'une des revendications 3 à 6.

9. Procédé de fabrication selon la revendication 7 ou la revendication 8, **caractérisé par le fait qu'**une contre-butée (26a), affectée au flan (16) découpé de la pièce, est implantée du côté dudit flan découpé (16) qui pointe à l'opposé du plateau (7) repose-pièces, de façon telle que ladite contre-butée (26a) et la pièce résiduelle (17) soient espacées l'une de l'autre, lors de la séparation finale dudit flan découpé (16) de la pièce (15) du type plaque, perpendiculairement au plan principal (53) de ladite pièce, au maximum d'une distance inférieure à l'épaisseur (d) dudit flan découpé (16).

10. Procédé de fabrication selon la revendication 9, **caractérisé par le fait que** la contre-butée (26a), affectée au flan (16) découpé de la pièce lors de la séparation finale dudit flan découpé (16) de la pièce (15) du type plaque, est mue dans la direction de mouvement (52) conjointement audit flan découpé (16), à l'issue de ladite séparation finale, et est alors espacée de la pièce résiduelle (17), perpendiculairement au plan principal (53) de ladite pièce, au maximum d'une distance inférieure à l'épaisseur (d) dudit flan découpé (16).

11. Procédé de fabrication selon la revendication 9 ou la revendication 10, **caractérisé par le fait que** la contre-butée (26a), affectée au flan (16) découpé de la pièce lors de la séparation finale dudit flan découpé (16) de la pièce (15) du type plaque, est prévue en tant que contre-butée (26a) dévolue à ladite séparation finale ; et **par le fait qu'**à l'issue de la séparation finale dudit flan découpé (16) de ladite pièce (15) du type plaque, une contre-butée additionnelle (26b), affectée audit flan découpé (16) et différant de ladite contre-butée (26a) dévolue à ladite séparation finale, est implantée du côté dudit flan découpé (16) qui pointe à l'opposé du plateau (7) repose-pièces, de façon telle que ladite contre-butée additionnelle (26b) et la pièce résiduelle (17) soient espacées l'une de l'autre, perpendiculairement au plan principal (53) de ladite pièce, au maximum d'une distance inférieure à l'épaisseur (d) dudit flan découpé (16).

12. Procédé de fabrication selon la revendication 11, **caractérisé par le fait que** la contre-butée additionnelle (26b) affectée au flan (16) découpé de la pièce est implantée, du côté dudit flan découpé (16) qui pointe à l'opposé du plateau (7) repose-pièces, avant que ledit flan découpé (16) soit mû dans la direction de mouvement (52).

13. Procédé de fabrication selon la revendication 11 ou la revendication 12, **caractérisé par le fait que** la contre-butée additionnelle (26b), affectée au flan (16) découpé de la pièce, est mue dans la direction de mouvement (52) conjointement audit flan découpé (16), à l'issue de la séparation finale, et est alors espacée de la pièce résiduelle (17), perpendiculairement au plan principal (53) de ladite pièce, au maximum d'une distance inférieure à l'épaisseur (d) dudit flan découpé (16).

14. Procédé de fabrication selon la revendication 8 et, en outre, selon la revendication 12 et/ou la revendication 13, **caractérisé par le fait que** le flan (16), découpé de la pièce et mû vers l'emplacement de manutention, est évacué du plateau (7) repose-pièces au moyen de la contre-butée additionnelle (26b) affectée audit flan découpé (16) ; et **par le fait que** ladite contre-butée additionnelle (26b) est implantée, préalablement au mouvement dudit flan découpé (16) dans la direction de mouvement (52), du côté dudit flan découpé (16) qui pointe à l'opposé dudit plateau (7) repose-pièces, parallèlement au plan principal (53) de ladite pièce, et/ou ladite butée additionnelle (26b) est mue dans la direction de mouvement (52) conjointement audit flan découpé (16), à l'issue de la séparation finale, de façon telle que, lorsque ledit flan découpé (16) atteint ledit emplacement de manutention, ladite contre-butée additionnelle (26b) soit implantée du côté dudit flan découpé (16) qui pointe à l'opposé dudit plateau (7) repose-pièces, de manière que ledit flan découpé (16) puisse être évacué dudit plateau (7) repose-pièces, au moyen de ladite contre-butée additionnelle (26b), par mouvement de ladite contre-butée additionnelle dirigé exclusivement perpendiculairement au plan principal (53) de ladite pièce.

15. Dispositif pour mouvoir un flan découpé (16) séparé d'une pièce (15) du type plaque, en particulier d'une tôle, avec production additionnelle d'une pièce résiduelle (17), dans une direction de mouvement (52) parallèle à un plan principal (53) de ladite pièce (15) du type plaque, ledit flan (16), découpé de la pièce, présentant une épaisseur (d) perpendiculairement au plan principal (53) de ladite pièce, comprenant
• un plateau (7) repose-pièces, qui s'étend parallèlement au plan principal (53)
de ladite pièce et sur lequel la pièce résiduelle (17) et le flan découpé (16) peuvent être disposés, perpendiculairement audit plan principal (53) de ladite pièce, de façon telle que ladite pièce résiduelle (17) et ledit flan découpé (16) soient placés en juxtaposition parallèlement audit plan principal (53) de la pièce, et avec recouvrement mutuel perpendiculairement audit plan principal (53) de ladite pièce,
• ainsi qu'un entraînement (50) de pièces résiduelles, au moyen duquel la pièce résiduelle (17) peut être entraînée dans la direction de mouvement (52) en charriant, avec elle, ledit flan découpé (16) prenant appui sur ladite pièce résiduelle (17) parallèlement audit plan principal (53) de ladite pièce,
**caractérisé par le fait**
**qu'**une contre-butée (26, 27 ; 26a, 26b) affectée au flan (16) découpé de la pièce, agissant perpendiculairement au plan principal (53) de la pièce et prévue du côté dudit flan découpé (16) qui pointe à l'opposé du plateau (7) repose-pièces, peut être mue dans la direction de mouvement (52) conjointement audit flan découpé (16), ladite contre-butée (26, 27 ; 26a, 26b) et la pièce résiduelle (17) étant espacées l'une de l'autre au cours du mouvement dans ladite direction de mouvement (52), perpendiculairement audit plan principal (53) de la pièce, au maximum d'une distance inférieure à l'épaisseur (d) dudit flan découpé (16).

16. Dispositif dévolu au déchargement d'un flan découpé (16) séparé d'une pièce (15) du type plaque, en particulier d'une tôle, avec production additionnelle d'une pièce résiduelle (17), à partir d'un plateau (7) repose-pièces s'étendant parallèlement à un plan principal (53) de ladite pièce (15) du type plaque, comprenant
• un dispositif de transfert au moyen duquel le flan (16), découpé de la pièce, peut être mû vers un emplacement de manutention dans une direction de mouvement (52) parallèle audit plan principal (53) de la pièce, sur ledit plateau (7) repose-pièces,
• ainsi qu'un dispositif d'enlèvement (26, 27, 26a, 26b, 42, 43) au moyen duquel ledit flan découpé (16), mû vers ledit emplacement de manutention, peut être évacué dudit plateau (7) repose-pièces par un mouvement d'enlèvement, perpendiculairement audit plan principal (53) de ladite pièce,
**caractérisé par le fait que**
le dispositif conforme à la revendication 15 est prévu en tant que dispositif de transfert (12,50).

17. Dispositif selon la revendication 16, **caractérisé par le fait que** le dispositif d'enlèvement (26, 27, 26a, 26b, 42, 43) inclut la contre-butée (26, 27 ; 26a, 26b) du dispositif de transfert, prévue pour le flan (16) découpé de la pièce.

18. Dispositif selon la revendication 17, **caractérisé par le fait que** le dispositif d'enlèvement (26, 27, 26a, 26b, 42, 43) inclut un dispositif de soulèvement (45, 46) qui peut être mû perpendiculairement au plan principal (53) de la pièce, est associé au côté du flan (16) découpé de la pièce, mû vers l'emplacement de manutention, qui pointe à l'opposé de la contre-butée (26, 27 ; 26a, 26b) affectée audit flan découpé (16), et au moyen duquel ledit flan découpé (16), mû vers ledit emplacement de manutention, peut être sollicité en direction de ladite contre-butée (26, 27 ; 26a, 26b) perpendiculairement audit plan principal (53) de la pièce, ledit flan découpé (16), sollicité d'une part par ledit dispositif de soulèvement (45, 46) et soutenu d'autre part par ladite contre-butée (26, 27 ; 26a, 26b), pouvant alors être évacué du plateau (7) repose-pièces, par le mouvement d'enlèvement, sous l'effet d'un mouvement conjugué dudit dispositif de soulèvement (45, 46) et de ladite contre-butée (26, 27 ; 26a, 26b) exécuté perpendiculairement audit plan principal (53) de la pièce, sachant que, lors dudit mouvement d'enlèvement, ledit flan découpé (16) peut être orienté, par ledit dispositif de soulèvement (45, 46) et/ou par ladite contre-butée (26, 27 ; 26a, 26b), de préférence parallèlement audit plan principal (53) de ladite pièce.

19. Dispositif selon la revendication 17 ou la revendication 18, **caractérisé par le fait que**, pour le mouvement du flan découpé (16) vers l'emplacement de manutention, la contre-butée (26, 27 ; 26a, 26b) affectée audit flan découpé (16) est transposée à un état de transfert et, en vue d'évacuer ledit flan découpé (16) du plateau (7) repose-pièces, à un état d'évacuation différant dudit état de transfert.

20. Agencement automatique dédié à la fabrication, comprenant une machine-outil (2) au moyen de laquelle un flan découpé (16) peut être séparé, dans une zone de travail (54) de ladite machine-outil (2), d'une pièce (15) du type plaque, en particulier d'une tôle, avec production additionnelle d'une pièce résiduelle (17), ainsi qu'un dispositif de transfert au moyen duquel ledit flan (16), découpé de ladite pièce, peut être mû dans une direction de mouvement (52) hors de ladite zone de travail (54) de la machine-outil (2), parallèlement à un plan principal (53) de ladite pièce (15) du type plaque, vers un emplacement situé à l'écart de ladite zone de travail (54) de ladite machine-outil (2), en particulier vers un emplacement de manutention, **caractérisé par le fait que** le dispositif conforme à la revendication 15 est prévu en tant que dispositif de transfert.

21. Agencement automatique dédié à la fabrication, comprenant une machine-outil (2) au moyen de laquelle un flan découpé (16) peut être séparé, dans une zone de travail (54) de ladite machine-outil (2), d'une pièce (15) du type plaque, en particulier d'une tôle, avec production additionnelle d'une pièce résiduelle (17), ainsi qu'un dispositif de déchargement au moyen duquel ledit flan (16), découpé de ladite pièce, peut être déchargé à partir d'un plateau (7) repose-pièces dudit agencement automatique, qui s'étend parallèlement à un plan principal (53) de ladite pièce (15) du type plaque, **caractérisé par le fait que** le dispositif conforme à l'une des revendications 16 à 19 est prévu en tant que dispositif de déchargement.

22. Agencement automatique selon la revendication 20 ou la revendication 21, **caractérisé par le fait qu'**une contre-butée (26a), affectée au flan (16) découpé de la pièce, peut être implantée, lors de la séparation finale dudit flan découpé (16) de ladite pièce (15) du type plaque, du côté dudit flan découpé (16) qui pointe à l'opposé du plateau (7) repose-pièces, de façon telle que ladite contre-butée (26a) et la pièce résiduelle (17) soient espacées l'une de l'autre, perpendiculairement au plan principal (53) de ladite pièce, au maximum d'une distance inférieure à l'épaisseur (d) dudit flan découpé (16).

23. Agencement automatique selon la revendication 22, **caractérisé par le fait que** la contre-butée (26a), affectée au flan (16) découpé de la pièce lors de la séparation finale dudit flan découpé (16) de ladite pièce (15) du type plaque, peut être mue dans la direction de mouvement (52) conjointement audit flan découpé (16), à l'issue de ladite séparation finale, et est alors espacée de la pièce résiduelle (17), perpendiculairement au plan principal (53) de ladite pièce, au maximum d'une distance inférieure à l'épaisseur (d) dudit flan découpé (16).

24. Agencement automatique selon la revendication 22 ou la revendication 23, **caractérisé par le fait que** la contre-butée (26a), affectée au flan (16) découpé de la pièce lors de la séparation finale dudit flan découpé (16) de ladite pièce (15) du type plaque, est prévue en tant que contre-butée (26a) dévolue à ladite séparation finale ; et **par le fait qu'**il est prévu, par ailleurs, une contre-butée additionnelle (26b) qui est affectée audit flan découpé (16), diffère de ladite contre-butée (26a) dévolue à ladite séparation finale et peut être implantée, à l'issue de ladite séparation finale dudit flan découpé (16) de ladite pièce (15) du type plaque, du côté dudit flan découpé (16) qui pointe à l'opposé du plateau (7) repose-pièces, de façon telle que ladite contre-butée additionnelle (26b) et la pièce résiduelle (17) soient espacées l'une de l'autre, perpendiculairement au plan principal (53) de ladite pièce, au maximum d'une distance inférieure à l'épaisseur (d) dudit flan découpé (16).

25. Agencement automatique selon la revendication 24, **caractérisé par le fait que** la contre-butée additionnelle (26b), affectée au flan (16) découpé de la pièce, peut être mue dans la direction de mouvement (52) conjointement audit flan découpé (16), à l'issue de la séparation finale dudit flan découpé (16), au moyen d'un entraînement de contrebutées, et est alors espacée de la pièce résiduelle (17), perpendiculairement au plan principal (53) de ladite pièce, au maximum d'une distance inférieure à l'épaisseur (d) dudit flan découpé (16).

26. Agencement automatique selon la revendication 21 et, en outre, selon la revendication 24 et/ou la revendication 25, **caractérisé par le fait que** le dispositif de déchargement, au moyen duquel le flan (16) découpé de la pièce peut être déchargé d'un plateau (7) repose-pièces dudit agencement automatique, qui s'étend parallèlement à un plan principal (53) de la pièce (15) du type plaque, inclut la contre-butée additionnelle (26b) affectée audit flan découpé (16).
